# EUROPÄISCHE PATENTSCHRIFT

(11) **EP 2 211 062 B1**
(45) Veröffentlichungstag und Bekanntmachung des Hinweises auf die Patenterteilung: **29.04.2015**
(21) Anmeldenummer: 09015461.8
(22) Anmeldetag: 15.12.2009
(51) Int. Cl.: F15B 15/22, F16D 48/02, F16D 23/12, F16D 25/08, F15B 21/00

(54) **Nehmerzylinder für ein schwingungsgedämpftes hydraulisches Kraftübertragungssystem, insbesondere eine hydraulische Kupplungsbetätigung für Kraftfahrzeuge**
Slave cylinder for a vibration-dampened hydraulic power transmission system, in particular a hydraulic clutch actuation for motor vehicles
Cylindre récepteur pour un système de transmission d'énergie hydraulique à oscillations amorties, notamment un actionnement d'embrayage hydraulique pour véhicules automobiles

(30) Priorität: 22.01.2009 DE 102009005828
(43) Veröffentlichungstag der Anmeldung: 28.07.2010
(73) Patentinhaber: FTE automotive GmbH, 96106 Ebern (DE)
(72) Erfinder: Macht, Egid, 81247 München (DE); Marks, Paul, 96106 Ebern (DE); Müller, Robert, 96126 Maroldsweisach (DE); Ryba, Jürgen, 96182 Reckendorf (DE); Weibelzahl, Wilfried, Dr., 96271 Grub (DE)
(74) Vertreter: Oppermann, Mark

(56) Entgegenhaltungen:
- EP-A1- 0 591 064
- EP-A2- 1 174 624
- EP-A2- 1 967 744
- DE-A1- 10 006 542

## Beschreibung

### TECHNISCHES GEBIET

Die vorliegende Erfindung bezieht sich auf einen Nehmerzylinder für ein schwingungsgedämpftes hydraulisches Kraftübertragungssystem gemäß dem Oberbegriff des Patentanspruchs 1. Insbesondere bezieht sich die Erfindung auf Nehmerzylinder, wie sie massenweise in hydraulischen Kupplungsbetätigungen für Kraftfahrzeuge zum Einsatz kommen.

### STAND DER TECHNIK

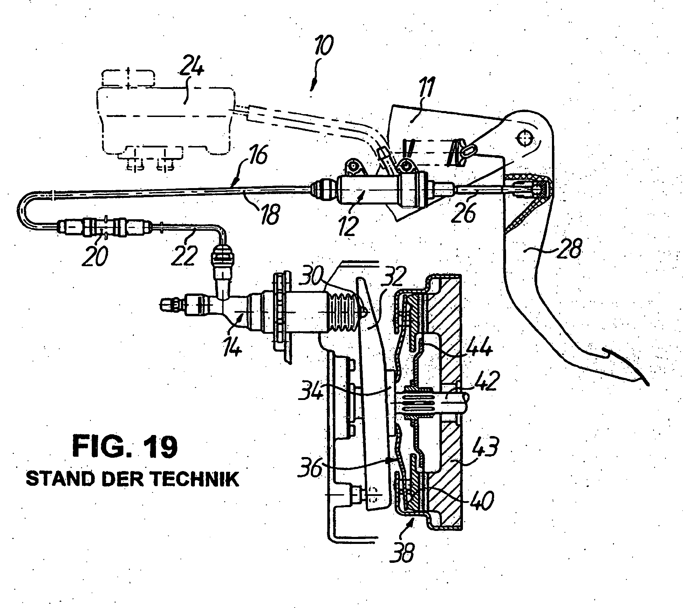

Die Fig. 19 zeigt eine herkömmliche hydraulische Kupplungsbetätigung 10 für Kraftfahrzeuge in einer vereinfachten Darstellung. Die hydraulische Kupplungsbetätigung 10 weist einen an einem Pedalbock 11 des Kraftfahrzeugs montierten Geberzylinder 12 und einen getriebenah im Kraftfahrzeug befestigten Nehmerzylinder 14 auf, die über eine Hydraulikleitung 16 hydraulisch miteinander verbunden sind, welche hier ausgehend vom Geberzylinder 12 aus einem ersten Rohrabschnitt 18, einem Schlauchabschnitt 20 und einem zweiten Rohrabschnitt 22 besteht. Der nicht dargestellte Kolben des hydraulisch an einen Ausgleichsbehälter 24 angeschlossenen Geberzylinders 12 ist über eine Kolbenstange 26 mit einem Kupplungspedal 28 wirkverbunden, so dass der Geberzylinder 12 durch Niedertreten des Kupplungspedals 28 betätigt werden kann, was eine Verschiebung des Kolbens im Geberzylinder 12 bewirkt. Hierbei wird in Richtung des Nehmerzylinders 14 eine Flüssigkeitssäule durch die Hydraulikleitung 16 hindurchgeschoben, die den Nehmerzylinder 14 hydraulisch beaufschlagt.

Der Nehmerzylinder 14, genauer dessen hier nicht gezeigter Kolben steht vermittels einer Kolbenstange 30 über einen Ausrückhebel 32 und ein Ausrücklager 34 mit einem Ausrückmechanismus 36 einer Reibungskupplung 38 in Wirkverbindung. Wird der Nehmerzylinder 14 zum Ausrücken der Reibungskupplung 38 hydraulisch beaufschlagt, so wird vermittels des Ausrückmechanismus 36 eine Kupplungsdruckplatte 40 von einer auf einer Getriebewelle 42 sitzenden, mit einer von der Kurbelwelle des Verbrennungsmotors (nicht dargestellt) getragenen Schwungscheibe 43 zusammenwirkenden Kupplungsmitnehmerscheibe 44 der Reibungskupplung 38 getrennt, und somit auch der Verbrennungsmotor vom Getriebe (ebenfalls nicht näher gezeigt) des Kraftfahrzeugs.

Wird das Kupplungspedal 28 entlastet, um die Reibungskupplung 38 wieder einzurücken, wird der Nehmerzylinder 14, genauer dessen Kolben infolge u.a. der Federkräfte der Reibungskupplung 38 wieder in seine Grund- bzw. Ausgangsstellung zurückgebracht, wobei die oben erwähnte Flüssigkeitssäule durch die Hydraulikleitung 16 hindurch wieder zurück in Richtung des Geberzylinders 12 geschoben wird.

Bei einer solchen hydraulischen Kupplungsbetätigung 10 - die als quasi-stationäres hydraulisches Kraftübertragungssystem zu betrachten ist, bei dem keine kontinuierliche Strömung der Hydraulikflüssigkeit vorliegt - werden Schwingungen vom Verbrennungsmotor, insbesondere dessen Kurbelwelle über die Bauteile der Reibungskupplung 38, das Ausrücklager 34, den Ausrückhebel 32 und den Nehmerzylinder 14 in die sich in der Hydraulikleitung 16 befindende Flüssigkeitssäule zwischen Nehmerzylinder 14 und Geberzylinder 12 übertragen, in der sie sich als Druckpulsationen fortpflanzen. Es wurde bereits als nachteilig empfunden, dass diese Druckpulsationen vom Fahrer am Kupplungspedal 28 als Vibrationen insbesondere dann zu spüren sind, wenn der Fuß auf dem Kupplungspedal 28 in typisch städtischer Fahrweise abgestützt wird - sogenanntes "Anlegekribbeln" - oder das durchgetretene Kupplungspedal 28 z.B. während eines Stopps vor einer Ampel gehalten wird.

So fehlt es denn im Stand der Technik nicht an Vorschlägen, wie dieser Problematik zu begegnen ist (z.B. DE 36 31 507 C2 "Quadratwendel", DE 40 03 521 C2 "Doppelleitung mit unterschiedlich langen Leitungszweigen", DE 195 40 753 C1 "Zusatzschwinger", DE 101 12 674 C1 "Membrandämpferdose", DE 103 51 907 A1 "Dämpfungsvorrichtung mit Labyrinthkörper"). Diesen Vorschlägen ist gemein, dass in die oder parallel zur Hydraulikleitung zwischen Geberzylinder und Nehmerzylinder eine separate, die Flüssigkeitssäule zwischen Geberzylinder und Nehmerzylinder nicht unterbrechende Baugruppe zur Schwingungsdämpfung eingesetzt bzw. angeordnet wird, welche die Druckpulsationen im Allgemeinen auch zufriedenstellend zu dämpfen vermag. Es steht im Motorraum jedoch nicht immer ausreichend Bauraum zur Unterbringung solcher Baugruppen zur Verfügung. Außerdem erhöht dieses Vorgehen die Anzahl an hydraulischen Verbindungsstellen (etwa Rast- oder Schraubverbindungen) zwischen den beteiligten Bauteilen und somit zwangsläufig die Gefahr von Leckagen sowie den Montageaufwand.

Vor diesem Hintergrund wurde bereits vorgeschlagen (z.B. DE 199 20 821 C1, DE 10 2005 044 582 A1), einen Zusatzschwinger bzw. Schwingungsdämpfer im Gehäuse des Geberzylinders, genauer in dessen Druckraum unterzubringen, wofür jedoch spezielle, d.h. in aufwendiger Weise ausgestaltete, insbesondere in axialer Richtung verlängerte Zylindergehäuse mit besonderer Aufnahme- und/oder Montagemöglichkeit für den Zusatzschwinger bzw. Schwingungsdämpfer vorgesehen werden mussten. Zudem ist gerade am Pedalbock bzw. im Bereich der Spritzwand im Kraftfahrzeug der Bauraum oft begrenzt, so dass voluminöse Geberzylinder unerwünscht sind.

Nicht näher betrachtet werden sollen in diesem Zusammenhang zwischen Geberzylinder und Nehmerzylinder geschaltete "doppeltwirkende" Ventilmechanismen (z.B. JP 59-89833 A, EP 1 719 921 A2), die bei jeder Verschiebung der Flüssigkeitssäule, d.h. sowohl bei einer Verschiebung in Richtung Nehmerzylinder als auch bei einer Verschiebung in Richtung Geberzylinder öffnen, und bei unbewegter Flüssigkeitssäule schließen, um den Geberzylinder vom Nehmerzylinder abzuschotten bzw. schwingungsmäßig zu entkoppeln, nachdem diese Ventilmechanismen (a) in der Regel ungleich aufwendiger ausgebildet sind als stets "druckmitteloffene" Dämpfungsvorrichtungen, die federvorgespannter Ventilkörper od.dgl. nicht bedürfen, (b) bestimmte Öffnungs- und Schließdrücke bedingen, welche in oft unerwünschter Weise die Rücklaufzeiten und die Systemhysterese erhöhen, und schließlich (c) mit Bypässen versehen anfälliger für Verschmutzungen und damit einhergehender Leistungseinbußen sind.

Schließlich offenbart die EP 0 591 064 A1 (DE 693 07 245 T2; siehe dort die einzige Figur) ein elektrohydraulisches Stellglied, insbesondere für die Betätigung einer vorgesteuerten Kupplung. Das Stellglied hat ein Gehäuse, in dem drei Baugruppen aufgenommen sind, nämlich ein in eine Kammer eingesetztes Magnetventil, eine hydromechanische Einheit und ein hydropneumatischer Dämpfer, wobei die beiden zuletzt genannten Baugruppen hintereinander in einer Aufnahme des Gehäuses angeordnet sind, die parallel zu der Kammer verläuft. Die hydromechanische Einheit umfasst eine Kolbenanordnung mit Haupt- und Hilfskolben, die in einer in der Aufnahme fest eingesetzten Muffe längsverschieblich aufgenommen ist und an der ein Betätigungselement (Kolbenstange) angeschlossen ist. Der am Boden der Aufnahme eingesetzte, mit einem Gas (Stickstoff) befüllte, hydropneumatische Dämpfer weist einen Metallteller auf, der durch eine elastomere Membran verschlossen ist, welche mittels eines Deckelelements am Metallteller befestigt ist.

Zwischen dem hydropneumatischen Dämpfer und der Kolbenanordnung ist des Weiteren ein Rückschlagventil eines mit dem Betätigungselement über den Hilfskolben verbundenen Verschleißausgleichsmechanismus eingefügt. Das Rückschlagventil umfasst einen Sitz aus Elastomermaterial, der zwischen zwei Metalltellern angeordnet ist, und ein Schließelement, das durch eine Feder zu dem Sitz hin beaufschlagt wird. Der kolbenseitige Metallteller enthält ein Loch, das den Durchfluss des Betätigungsmediums (Öl) zum Hilfskolben ermöglicht. Wenn der Hauptkolben an einer Wand des Deckelelements des hydropneumatischen Dämpfers zur Anlage gelangt, schlägt das Schließelement ebenfalls an dieser Wand an, und das Rückschlagventil ist geöffnet. Sobald sich hingegen der hydraulisch beaufschlagte Hauptkolben verschiebt, schließt das Rückschlagventil und unterbricht damit die hydraulische Verbindung zum Hilfskolben.

Das unter Druck stehende Öl wird im Übrigen über einen Kanal des Gehäuses an den Hydraulikeingang des Magnetventils angelegt, dessen Ausgang über einen zweiten Kanal in die Aufnahme in der Nähe des hydropneumatischen Dämpfers führt. Dort besitzt das Gehäuse eine umläufende Auskehlung, von der das Öl über löcher im Deckelelement des hydropneumatischen Dämpfers zur Kolbenanordnung gelangt. Die Durchmesseer der Locher im Deckelelement bzw. im kolbenseitigen Metallteller sind schließlich so kalibriert, das Strömungsdrosseln gebildet werden, die gemeinsam mit dem hydropneumatischen Dämpfer zur Schwingungsdämpfung beitragen, zumindest wenn das Rückschlagventil geöffnet ist.

### AUFGABENSTELLUNG

Der Erfindung liegt die Aufgabe zugrunde, ausgehend vom Stand der Technik, wie er etwa durch die den Oberbegriff des Patentanspruchs 1 bildende DE 40 03 521 C2 repräsentiert wird, ein schwingungsgedämpftes hydraulisches Kraftübertragungssystem, insbesondere eine hydraulische Kupplungsbetätigung für Kräftfahrzeuge dahingehend weiterzubilden, dass die schwingungsdämpfenden Maßnahmen möglichst kostengünstig und platzsparend in dem Kraftübertragungssystem integriert sind.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 24.

Gemäß der Erfindung ist bei einem Nehmerzylinder für ein schwingungsgedämpftes hydraulisches Kraftübertragungssystem, insbesondere eine hydraulische Kupplungsbetätigung für Kraftfahrzeuge, der ein Zylindergehäuse, einen darin längsverschieblich aufgenommenen Kolben und einen Druckraum aufweist, welcher von dem Zylindergehäuse und dem Kolben begrenzt und wahlweise über einen im Zylindergehäuse vorgesehenen Druckanschluss mit einem Druckmittel beaufschlagbar ist, um den Kolben im Zylindergehäuse zu verschieben, ein in dem Druckraum eingesetztes, im Druckanschluss befestigtes Einsatzteil vorgesehen, das mit einer für das Druckmittel stets offenen Vorrichtung zur Reduzierung von Druckpulsationen ausgerüstet ist.

Dadurch, dass das mit der Vorrichtung zur Reduzierung von Druckpulsationen ausgerüstete Einsatzteil in den Druckraum des Nehmerzylinders eingesetzt ist - wofür kein zusätzlicher Bauraum vorzusehen ist, da der hier ohnehin vorhandene Zylindertotraum genutzt werden kann, so dass sich die axiale Baulänge des Nehmerzylinders verglichen mit herkömmlichen Konstruktionen nicht ändert - erfolgt zunächst die Integration der schwingungsdämpfenden Maßnahmen im Kraftübertragungssystem auf sehr platzsparende Weise; anders als im Stand der Technik müssen weder in der Hydraulikleitung zwischen Geberzylinder und Nehmerzylinder noch im Geberzylinder irgendwelche schwingungsdämpfenden Baugruppen vorgesehen und gehaltert werden. Da darüber hinaus das Einsatzteil im Druckanschluss des Nehmerzylinders befestigt wird, sind keine zusätzlichen konstruktiven Maßnahmen für den Einbau / die Halterung des Einsatzteils zu treffen, es kann vielmehr ein vorhandener Nehmerzylinder, wie er etwa aus der EP 1 666 752 A2 der Anmelderin bekannt ist, unverändert hergenommen werden, um das erfindungsgemäße Einsatzteil zu integrieren. Durch die erfindungsgemäße Anordnung der Vorrichtung zur Reduzierung von Druckpulsationen im Druckraum des Nehmerzylinders, d.h. in unmittelbarer Nähe zum Ort der Einleitung der Schwingungen in die Flüssigkeitssäule wird ferner in vorteilhafter Weise dafür gesorgt, dass sich die Druckpulsationen nicht mit maximaler Amplitude in/durch die Hydraulikleitung zwischen Nehmerzylinder und Geberzylinder fortpflanzen können, so dass auch die Gefahr minimiert wird, dass sich die Hydraulikleitung schwingungsbedingt von ihren Befestigungsstellen z.B. an der Karosserie des Kraftfahrzeugs löst bzw. sich an diesen losrüttelt. Ein weiterer Vorteil der erfindungsgemäßen Anordnung der Vorrichtung zur Reduzierung von Druckpulsationen im Druckraum des Nehmerzylinders besteht darin, dass beim Einsatz eines derart ausgerüsteten Nehmerzylinders in einer - ansonsten herkömmlichen - hydraulischen Kupplungsbetätigung gemäß Fig. 19 der nehmerzylindernahe, zweite Rohrabschnitt der Hydraulikleitung, der in der Regel zur Schwingungsreduktion mit einem gegenüber dem ersten Rohrabschnitt verengten Querschnitt ausgeführt wurde, entfallen kann, d.h. der Schlauchabschnitt der Hydraulikleitung kann nunmehr unmittelbar an den Druckanschluss des Nehmerzylinders angeschlossen werden, was zum einen die Kosten und den Bauraumbedarf deutlich verringert (Wegfall des zweiten Rohrabschnitts, eines zugeordneten Halters und einer Steckverbindung), zum anderen durch Entfall besagter Steckverbindung eine geringere Volumenaufnahme und robustere Konstruktion bedingt.

In einer fertigungstechnisch besonders einfachen, kompakten Ausgestaltung kann das Einsatzteil im Wesentlichen topfförmig ausgebildet sein, mit einem Mantelabschnitt und einem Boden, an dem sich ein im Wesentlichen hohlzylindrischer Fortsatz anschließt, der in dem Druckanschluss des Zylindergehäuses eingesteckt ist.

Grundsätzlich ist es möglich, das Einsatzteil kraftschlüssig (z.B. mittels Presssitz) oder stoffschlüssig (etwa mit einer Schweiß- oder Klebeverbindung) im Druckanschluss des Zylindergehäuses festzusetzen. Insbesondere im Hinblick auf eine einfache Montage bevorzugt ist es allerdings, das Einsatzteil axial formschlüssig im Druckanschluss des Zylindergehäuses zu befestigen, namentlich mittels einer Schnappverbindung. In zweckmäßiger Ausgestaltung ist hierbei der Fortsatz des Einsatzteils ausgehend von seinem freien Ende am Außenumfang mit einem Ringbund versehen und zur Bildung einer Mehrzahl von Federarmen mehrfach längsgeschlitzt, wobei der Ringbund am Fortsatz im montierten Zustand des Einsatzteils eine vom Druckraum abgewandte, ringförmige Stirnfläche im Druckanschluss des Zylindergehäuses hintergreift. Dabei ist es besonders kostengünstig, wenn das Zylindergehäuse einen Grundkörper aus Kunststoff aufweist, welcher mit einer Bohrung versehen ist, in der eine metallische Laufhülse für den Kolben eingesetzt ist, wobei die vom Einsatzteil hintergriffene, ringförmige Stirnfläche im Druckanschluss des Zylindergehäuses durch ein Ende der Laufhülse des Zylindergehäuses ausgebildet ist.

In einer ersten Variante kann die Vorrichtung zur Reduzierung von Druckpulsationen eine Leitungszusatzstrecke in Form eines Kanals mit einer druckraumseitigen Öffnung und einer druckanschlussseitigen Öffnung umfassen, wobei der Kanal eine Länge aufweist, die ein Mehrfaches des direkten Abstands zwischen den beiden Öffnungen beträgt. Damit ist quasi der zweite Rohrabschnitt gemäß Fig. 19 auf einfache und sehr platzsparende Weise im Nehmerzylinder integriert. Wenngleich verschiedene Verläufe des Kanals denkbar sind, ist es insbesondere unter fertigungstechnischen Gesichtspunkten bevorzugt, wenn der Kanal einen schraubengewindeartig verlaufenden Wendelabschnitt aufweist. Hierbei kann der Wendelabschnitt des Kanals am Außenumfang des Mantelabschnitts des Einsatzteils als Nut ausgebildet sein, die nach radial außen von einer Innenumfangsfläche des Zylindergehäuses abgedeckt ist, was zum einen besonders einfach und kostengünstig herstellbar ist - beispielsweise mittels Spitzgießen des Einsatzteils, dessen nach radial außen offene Nut dann erst beim Fügen des Einsatzteils in den Druckraum des Nehmerzylinders durch die dort ohnehin vorhandene Zylinderwandung auf denkbar einfache Weise zum Kanal "komplettiert" wird, und zwar ohne die Verwendung von Dichtelementen od.dgl. - und zum anderen eine Umlenkung der Flüssigkeitssäule bewirkt, die sich im Hinblick auf eine gute Schwingungsdämpfung bei möglichst geringem Durchflusswiderstand als vorteilhaft erwiesen hat. In zweckmäßiger Ausgestaltung kann der Kanal hierbei einen durch den Fortsatz des Einsatzteils gebildeten Endabschnitt aufweisen, der mit dem Wendelabschnitt durch einen im Boden des Einsatzteils verlaufenden Verbindungsabschnitt des Kanals verbunden ist. Im Hinblick auf eine möglichst gute Dämpfungswirkung hat es sich ferner als vorteilhaft erwiesen, wenn der Wendelabschnitt des Kanals einen Querschnitt aufweist, der kleiner oder gleich dem minimalen Querschnitt des Druckanschlusses ist. Um schließlich für eine gute Entlüftung des Nehmerzylinders mit einem Spüleffekt für ggf. im Druckraum eingeschlossene Luftbläschen zu sorgen, befindet sich die druckraumseitige Öffnung des Kanals in der Einbaulage des Nehmerzylinders vorzugsweise oben nahe der Innenumfangsfläche des Zylindergehäuses.

In einer zweiten Variante kann die Vorrichtung zur Reduzierung von Druckpulsationen einen am Einsatzteil montierten Volumenaufnehmer umfassen, der unter Druck elastisch verformbar ist, um Schwingungen zu dämpfen bzw. zu reduzieren. Für eine besonders kompakte Ausgestaltung kann hierbei der Volumenaufnehmer am Innenumfang des Mantelabschnitts des Einsatzteils montiert sein. Vorzugweise handelt es sich bei dem Volumenaufnehmer um ein gummielastisches, spulenförmiges Element, mit einer Durchgangsbohrung und einer außenumfangsseitigen Ringaussparung, die zusammen mit dem Innenumfang des Mantelabschnitts des Einsatzteils eine ringförmige Luftkammer begrenzt. Bei einer solchen Ausgestaltung des Volumenaufnehmers wird, wenn eine Druckamplitude in die Durchgangsbohrung hineinläuft, das spulenförmige Element gegen die Federwirkung des gummielastischen Materials verformt, wobei das Luftvolumen in der ringförmigen Luftkammer komprimiert wird, so dass das spulenförmige Element - wie der Begriff "Volumenaufnehmer" schon impliziert - im Bereich der Durchgangsbohrung eine definierte Aufweitung erfährt, die zu einer gewissen "Entlastung" der Druckamplitude führt. Hierbei sorgt die Federwirkung des gummielastischen Materials und des komprimierten Luftvolumens für eine automatische Rückstellung des spulenförmigen Elements in seine Ausgangsform, wenn der im Bereich der Durchgangsbohrung des spulenförmigen Elements vorliegende Druck des Druckmittels einen vorbestimmten Wert unterschreitet.

Als besonders schwingungsdämpfend bzw. -reduzierend wirksam hat es sich erwiesen, wenn bei einer Kombination der beiden vorbeschriebenen Varianten der Vorrichtung zur Reduzierung von Druckpulsationen der Volumenaufnehmer dem die Leitungszusatzstrecke bildenden Kanal vom Druckraum des Nehmerzylinders aus gesehen hydraulisch vorgeschaltet ist, so dass die sich vom Druckraum des Nehmerzylinders weiter fortpflanzende Druckpulsation nicht erst durch die Leitungszusatzstrecke hindurch laufen muss, um den Volumenaufnehmer zu erreichen. In einer besonders kurz und kompakt bauenden Ausgestaltung kann hierbei der Wendelabschnitt des Kanals den Volumenaufnehmer koaxial umgeben.

Die vorbeschriebene erste Variante der Vorrichtung zur Reduzierung von Druckpulsationen vermittels Leitungszusatzstrecke kann den jeweiligen Funktionserfordernissen entsprechend derart weitergebildet werden, dass das Einsatzteil einen im Wesentlichen topfförmig ausgebildeten Inneneinsatz umfasst, mit einem Inneneinsatz-Mantelabschnitt und einem Inneneinsatzboden, wobei zwischen dem Mantelabschnitt des Einsatzteils und dem Inneneinsatz-Mantelabschnitt eine schraubengewindeartig verlaufende Wendelabschnittsverlängerung ausgebildet ist, deren eines Ende mit dem Wendelabschnitt und deren anderes Ende mit einem Innenraum des Inneneinsatzes fluidverbunden ist, welcher seinerseits mit dem Druckanschluss kommuniziert. Im Ergebnis kann so auf einfache Weise die Leitungszusatzstrecke wie gewünscht oder benötigt noch verlängert werden, ohne zugleich den axialen Bauraumbedarf zu vergrößern. Auch hier ist es insbesondere im Hinblick auf eine kostengünstige Herstellbarkeit mittels z.B. Spritzgießen aus Kunststoff von Vorteil, wenn die Wendelabschnittsverlängerung am Außenumfang des Inneneinsatz-Mantelabschnitts als Nut ausgebildet ist, die nach radial außen von einer - dort ohnehin vorhandenen - Innenumfangsfläche des Mantelabschnitts des Einsatzteils abgedeckt ist; Dichtelemente od.dgl. sind bei dieser Ausgestaltung wiederum entbehrlich.

Im weiteren Verfolg des Erfindungsgedankens kann im Einsatzteil ein bezüglich der Vorrichtung zur Reduzierung von Druckpulsationen hydraulisch parallel geschaltetes, thermostatisch arbeitendes Bypassventil vorgesehen sein, das bei niedrigen Temperaturen für eine direkte Fluidverbindung zwischen dem Druckraum und dem Druckanschluss sorgt und diese Fluidverbindung bei höheren Temperaturen unterbricht. Diese Ausgestaltung hat im Falle von niedrigen Temperaturen, bei denen das Hydraulikmedium - in der Regel Bremsflüssigkeit - bereits relativ zäh ist, zum einen den Vorteil, dass sich die am Kupplungspedal aufzubringenden Kräfte bei schneller Betätigung nicht unerwünscht vergrößern, zum anderen, dass die Rücklaufgeschwindigkeit des Kupplungspedals nicht in unerwünschter Weise abnimmt. Zweckmäßig weist das Bypassventil hierbei ein im Innenraum des Inneneinsatzes zwischen dem Boden des Einsatzteils und dem Inneneinsatzboden aufgenommenes Thermostatelement auf, welches mit einem Stößel wirkverbunden ist, der eine Öffnung im Inneneinsatzboden temperaturabhängig öffnet oder verschließt, um bei niedrigen Temperaturen für die direkte Fluidverbindung zwischen dem Druckraum und dem Druckanschluss zu sorgen bzw. diese Fluidverbindung bei höheren Temperaturen zu unterbrechen.

In einer weiteren, vorteilhaften Ausgestaltung kann das Einsatzteil bzw. der Inneneinsatz an seinem druckraumseitigen Ende einen Fesselabschnitt aufweisen, welcher mit einem druckraumseitigen Fortsatz des Kolbens dergestalt zusammenwirkt, dass der Kolben vor einer Druckmittelbefüllung oder ersten Betätigung des Nehmerzylinders in einer vorbestimmten Hubstellung bezüglich des Zylindergehäuses fixiert und mit der Druckmittelbefüllung bzw. ersten Betätigung des Nehmerzylinders gegenüber dem Zylindergehäuse freigebbar ist. Durch die vermittels des Fesselabschnitts am Einsatzteil bzw. Inneneinsatz und des Fortsatzes am Kolben bewirkte temporäre Fesselung des Kolbens gegenüber dem Zylindergehäuse ist es u.a. möglich, den Nehmerzylinder an seinem Einsatzort im Wesentlichen kraftfrei zu montieren, weil dabei das am/im Nehmerzylinder regelmäßig vorhandene, den Kolben zurückstellende Federelement nicht durch Hineinschieben der mit dem Kolben wirkverbundenen Kolbenstange in das Zylindergehäuse zusammengedrückt werden muss, vielmehr der Kolben und damit auch die Kolbenstange bezüglich des Zylindergehäuses gegen die Kraft des Federelements mittels Fesselabschnitt und Fortsatz temporär in einer definierten, für die Montage günstigen Hubstellung gehalten werden kann. Andere Einsatzzwecke dieser Ausgestaltung umfassen die Vermeidung einer Überbefüllung eines einen solchen Nehmerzylinder aufweisenden hydraulischen Systems bei dessen Vorbefüllung, wobei Fesselabschnitt und Fortsatz dafür sorgen, dass der Nehmerzylinder vor seiner Erstbetätigung nur eine vorbestimmte Menge an Hydraulikflüssigkeit aufnehmen kann, sowie die Sicherung des derart ausgebildeten Nehmerzylinders gegen Transportschäden, wobei Fesselabschnitt und Fortsatz beim Transport des Nehmerzylinders ein übermäßiges Vorstehen der Kolbenstange aus dem Zylindergehäuse heraus verhindern. Im Hinblick auf eine einfache und kostengünstige Herstellung und Bereitstellung der Vormontageposition des Kolbens ist es bevorzugt, wenn der Fesselabschnitt des Einsatzteils einen bezüglich einer Mittelachse des Druckraums axial ausgefluchteten Hohlzylinder mit einem innenumfangsseitigen Ringwulst aufweist, während der zentrische Fortsatz am Kolben außenumfangsseitig mit einem Ringbund versehen ist, der im am Einsatzteil fixierten Zustand des Kolbens den Ringwulst in der Art einer Schnappverbindung hintergreift.

Grundsätzlich kann das Einsatzteil aus einem metallischen Werkstoff, beispielsweise einer Aluminiumlegierung, etwa durch spanende Bearbeitung hergestellt werden. Insbesondere dem Erhalt einer kostengünstigen Vorrichtung förderlich ist es schließlich aber, wenn das Einsatzteil aus einem Kunststoff spritzgegossen ist, wie schon erwähnt.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, in denen gleiche Bezugszeichen gleiche bzw. entsprechende Teile kennzeichnen und elastomere Teile zur Vereinfachung der Darstellung zumeist im unverformten Zustand gezeigt sind. In den Zeichnungen zeigen:
- Fig. 1: eine Längsschnittansicht eines Nehmerzylinders für eine hydraulische Kupplungsbetätigung für Kraftfahrzeuge, in dessen Druckraum ein Einsatzteil eingesetzt ist, das mit einer für das Druckmittel stets offenen Vorrichtung zur Reduzierung von Druckpulsationen ausgerüstet ist, welche in Kombination eine Leitungszusatzstrecke in Form eines Kanals und einen Volumenaufnehmer aufweist, nach einem ersten Ausführungsbeispiel der Erfindung,
- Fig. 2: eine perspektivische Einzeldarstellung des bei dem Nehmerzylinder gemäß Fig. 1 im Druckanschluss befestigten Einsatzteils von schräg vorne,
- Fig. 3: eine Seitenansicht des Einsatzteils gemäß Fig. 2,
- Fig. 4: eine Vorderansicht des Einsatzteils gemäß Fig. 2 von links in Fig. 3,
- Fig. 5: eine Rückansicht des Einsatzteils gemäß Fig. 2 von rechts in Fig. 3,
- Fig. 6: eine Schnittansicht des Einsatzteils gemäß Fig. 2 entsprechend der Schnittverlaufslinie VI-VI in Fig. 5,
- Fig. 7: eine vergrößerte Darstellung des Details VII in Fig. 6,
- Fig. 8: eine perspektivische Einzeldarstellung des bei dem Nehmerzylinder gemäß Fig. 1 am Einsatzteil montierten elastomeren Volumenaufnehmers von schräg vorne,
- Fig. 9: eine Längsschnittansicht des Volumenaufnehmers gemäß Fig. 8,
- Fig. 10: eine abgebrochene Längsschnittansicht eines Nehmerzylinders für eine hydraulische Kupplungsbetätigung für Kraftfahrzeuge, in dessen Druckraum ein Einsatzteil eingesetzt ist, das mit einer für das Druckmittel stets offenen Vorrichtung zur Reduzierung von Druckpulsationen ausgerüstet ist, welche lediglich eine Leitungszusatzstrecke in Form eines Kanals aufweist, nach einem zweiten Ausführungsbeispiel der Erfindung,
- Fig. 11: eine abgebrochene Längsschnittansicht eines Nehmerzylinders für eine hydraulische Kupplungsbetätigung für Kraftfahrzeuge, in dessen Druckraum ein Einsatzteil eingesetzt ist, das mit einer für das Druckmittel stets offenen Vorrichtung zur Reduzierung von Druckpulsationen ausgerüstet ist, welche lediglich einen Volumenaufnehmer aufweist, nach einem dritten Ausführungsbeispiel der Erfindung,
- Fig. 12: eine abgebrochene Längsschnittansicht eines Nehmerzylinders für eine hydraulische Kupplungsbetätigung für Kraftfahrzeuge, in dessen Druckraum ein Einsatzteil eingesetzt ist, das mit einer für das Druckmittel stets offenen Vorrichtung zur Reduzierung von Druckpulsationen ausgerüstet ist, welche eine Leitungszusatzstrecke in Form eines Kanals aufweist, wobei das Einsatzteil einen den Kanal verlängernden Inneneinsatz umfasst, in dem ein thermostatisch arbeitendes Bypassventil vorgesehen ist, nach einem vierten Ausführungsbeispiel der Erfindung,
- Fig. 13: eine Längsschnittansicht des bei dem Nehmerzylinder gemäß Fig. 12 im Druckanschluss befestigten Einsatzteils mit Inneneinsatz und Bypassventil,
- Fig. 14: eine Schnittansicht des Einsatzteils gemäß Fig. 13 entsprechend der Schnittverlaufslinie XIV-XIV in Fig. 13,
- Fig. 15 bis Fig. 17: aufgebrochene perspektivische Darstellungen des Einsatzteils gemäß Fig. 13, zur Veranschaulichung der von einem Thermostatelement des Bypassventils freigebbaren Druckmittelwegstrecken für eine direkte Fluidverbindung zwischen dem Druckraum und dem Druckanschluss des Nehmerzylinders,

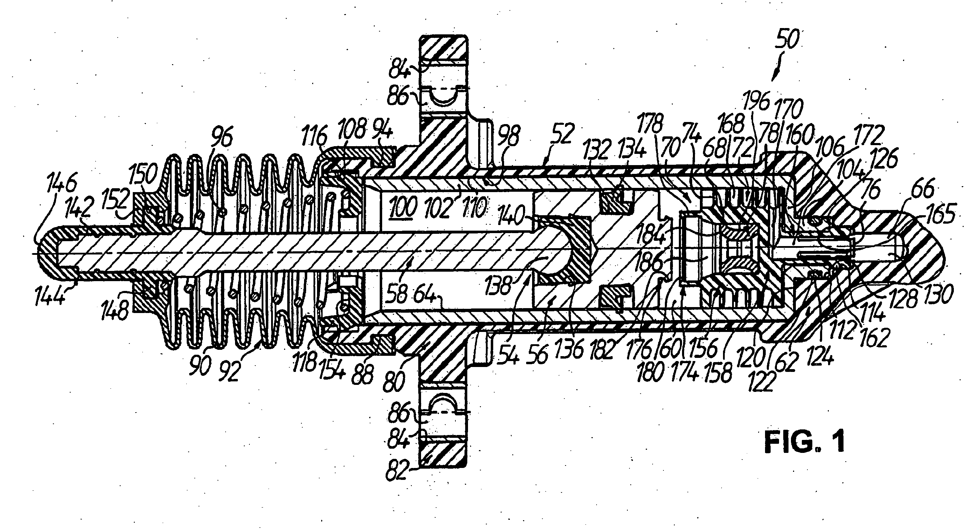

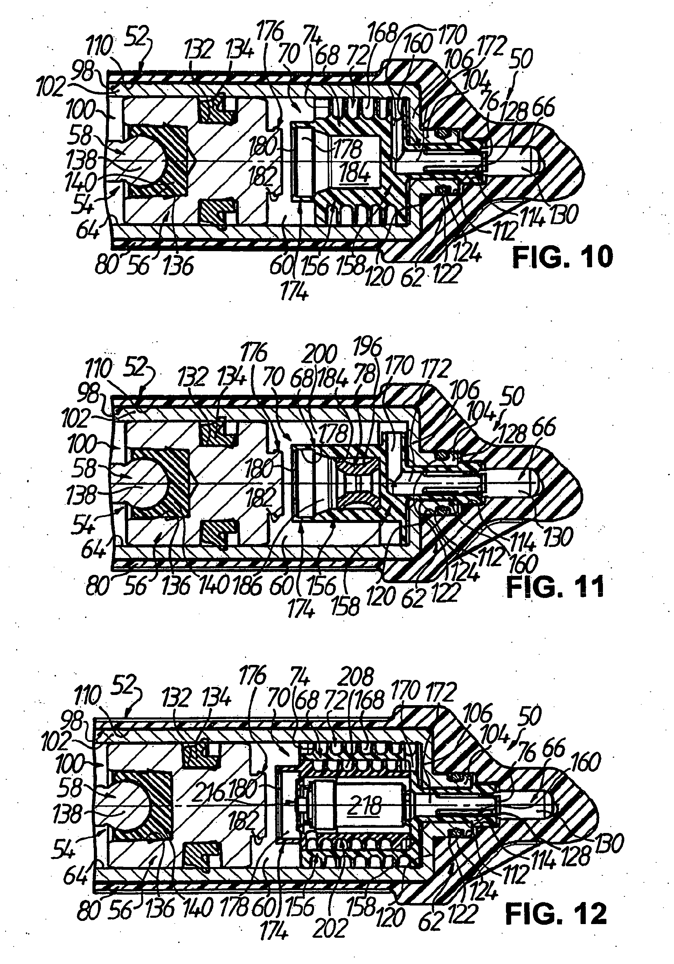

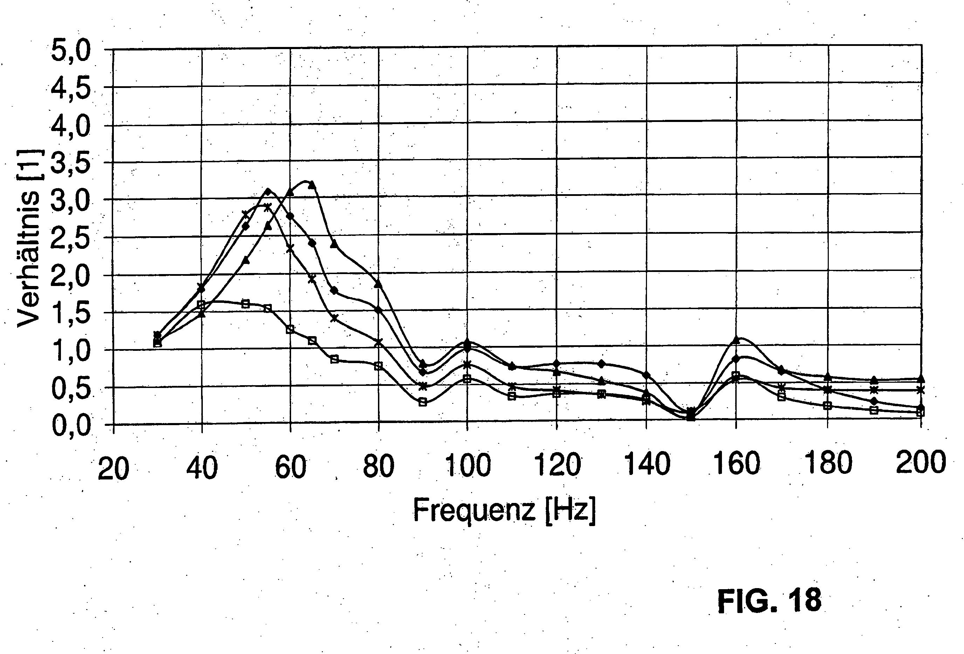

- Fig. 18: ein Diagramm, in dem für (1.) eine hydraulische Kupplungsbetätigung ohne erfindungsgemäße Vorrichtung zur Reduzierung von Druckpulsationen (Markierung mit Dreiecken), (2.) eine hydraulische Kupplungsbetätigung mit einem entsprechend Fig. 1 ausgerüsteten Nehmerzylinder (Markierung mit nicht ausgefüllten Quadraten), (3.) eine hydraulische Kupplungsbetätigung mit einem entsprechend Fig. 10 ausgerüsteten Nehmerzylinder (Markierung mit Rauten) sowie (4.) eine hydraulische Kupplungsbetätigung mit einem entsprechend Fig. 11 ausgerüsteten Nehmerzylinder (Markierung mit Sternchen) das Verhältnis der an einer Kolbenstange des Geberzylinders gemessenen Beschleunigung zu der an einer Kolbenstange des Nehmerzylinders gemessenen Beschleunigung über der Frequenz aufgetragen ist, als Ergebnis eines Versuchs, bei dem eine Sinusschwingung mit variabler Frequenz und einer Amplitude von 1 g (9,81 m/s²) an die Kolbenstange des Nehmerzylinder angelegt wurde, und
- Fig. 19: eine prinzipielle Darstellung einer hydraulischen Kupplungsbetätigung nach dem Stand der Technik.

### DETAILLIERTE BESCHREIBUNG DER AUSFÜHRUNGSBEISPIELE

Die Fig. 1 zeigt einen Nehmerzylinder 50 für ein schwingungsgedämpftes hydraulisches Kraftübertragungssystem, namentlich eine schwingungsgedämpfte hydraulische Kupplungsbetätigung für Kraftfahrzeuge. Der Nehmerzylinder 50 hat ein allgemein mit 52 beziffertes Zylindergehäuse, in dem eine Kolbenbaugruppe 54 längsverschieblich aufgenommen ist, die einen Kolben 56 und eine zumindest zug- und druckfest, also betätigungswirksam mit dem Kolben 56 verbundene Kolbenstange 58 umfasst. Im Zylindergehäuse 52 befindet sich ein Druckraum 60, der auf der in Fig. 1 linken Seite variabel von dem Kolben 56, auf der in Fig. 1 rechten Seite fest von einem Gehäuseboden 62 des Zylindergehäuses 52 und nach radial außen fest von einer Umfangswand 64 des Zylindergehäuses 52 begrenzt ist. Der Druckraum 60 ist wahlweise über einen am Gehäuseboden 62 vorgesehenen Druckanschluss 66, der im montierten Zustand des Nehmerzylinders 50 in an sich bekannter Weise (vgl. Fig. 19) über eine Druckleitung (die verglichen mit Fig. 19 ggf. auch anders ausgebildet sein kann) an einen Kupplungsgeberzylinder angeschlossen ist, mit einem Druckmittel, etwa Bremsflüssigkeit beaufschlagbar, um den Kolben 56 im Zylindergehäuse 52 zu verschieben. Wie nachfolgend noch näher beschrieben werden wird, ist in dem Druckraum 60 angrenzend an den Gehäuseboden 62 ein Einsatzteil 68 eingesetzt, welches im Druckanschluss 66 befestigt ist und im hier dargestellten ersten Ausführungsbeispiel vorteilhaft mehrere Funktionen erfüllt. Hierbei dient das Einsatzteil 68 insbesondere als Träger für eine für das Druckmittel stets offenen Vorrichtung 70 zur Reduzierung von Druckpulsationen bzw. ist mit dieser ausgerüstet.

Wie weiter unten ebenfalls noch im Detail erläutert werden wird, umfasst die im montierten Zustand des Nehmerzylinders 50 mithin zwischen den Druckraum 60 des Nehmerzylinders 50 und einen Druckraum des Geberzylinders (vgl. wiederum Fig. 19) geschaltete Vorrichtung 70 zur Reduzierung von Druckpulsationen zum einen eine Leitungszusatzstrecke in Form eines Kanals 72, der eine druckraum- bzw. nehmerzylinderseitige Öffnung 74, eine druckanschluss- bzw. geberzylinderseitige Öffnung 76 und dazwischen eine Kanallänge aufweist, die ein Mehrfaches des direkten Abstands, d.h. des "Luftlinienabstands" zwischen den beiden Öffnungen 74, 76 beträgt, und zum anderen einen am Einsatzteil 68 montierten Volumenaufnehmer 78, der unter Druck elastisch verformbar ist. Im Ergebnis sind der Kanal 72 und der Volumenaufnehmer 78 der Vorrichtung 70 zur Reduzierung von Druckpulsationen im Zylindergehäuse 52 höchst kompakt zu einer Baugruppe zusammengefasst, wobei das Einsatzteil 68 zumindest teilweise zusammen mit dem Zylindergehäuse 52 den Kanal 72 begrenzt.

Gemäß Fig. 1 weist das Zylindergehäuse 52 einen vorzugsweise aus Kunststoff spritzgegossenen Grundkörper 80 auf, der außenumfangsseitig mit einem Befestigungsflansch 82 für die Montage des Nehmerzylinders 50 im Kraftfahrzeug versehen ist. Der Befestigungsflansch 82 weist zwei Befestigungsbohrungen 84 auf, die mittels geschlitzter Stahlbuchsen 86 verstärkt sind. Durch die mit den Stahlbuchsen 86 ausgekleideten Befestigungsbohrungen 84 erstrecken sich im montierten Zustand des Nehmerzylinders 50 z.B. Schrauben (nicht gezeigt) hindurch, die der Befestigung des Nehmerzylinders 50 an etwa einer Getriebewand (nicht dargestellt) im Kraftfahrzeug dienen. In Fig. 1 links von dem Befestigungsflansch 82 hat der Grundkörper 80 des Zylindergehäuses 52 des Weiteren außenumfangsseitig eine Radialnut 88, in die eine einen die Kolbenstange 58 umgebenden Faltenbalgabschnitt 90 aufweisende elastomere Schutzkappe 92 mit einem innenumfangsseitigen Ringbund 94 eingeknüpft ist. Der Faltenbalgabschnitt 90 der Schutzkappe 92 umschließt außerdem ein auf der vom Druckraum 60 abgewandten Seite des Kolbens 56 vorgesehenes Federelement in der Form einer Schraubendruckfeder 96, die an ihrem in Fig. 1 rechten Ende am Zylindergehäuse 52 abgestützt ist und mit ihrem in Fig. 1 linken Ende an der Kolbenstange 58 angreift, so dass die Schraubendruckfeder 96 die Kolbenbaugruppe 54 in einer vom Gehäuseboden 62 weggewandten Richtung vorspannt, um die Kolbenstange 58 im montierten Zustand des Nehmerzylinders 50 in Anlage an einem Kupplungshebel (nicht gezeigt) zu halten.

Innenumfangsseitig weist der Grundkörper 80 des Zylindergehäuses 52 eine in Fig. 1 nach links offene Stufenbohrung 98 auf, in die eine vorzugsweise metallische Laufhülse 100 als weiterer Bestandteil des Zylindergehäuses 52 eingesetzt ist. Die Laufhülse 100 hat zwei hohlzylindrische Hülsenabschnitte 102, 104 unterschiedlichen Durchmessers, die am Gehäuseboden 62 des Zylindergehäuses 52 über einen Ringabschnitt 106 miteinander verbunden sind. Ausgehend von der in Fig. 1 linken Seite weist die Stufenbohrung 98 des Grundkörpers 80 nun vier Bohrungsabschnitte 108, 110, 112 und 114 verschiedenen Durchmessers auf, der sich in Fig. 1 von links nach rechts verkleinert.

Der erste Bohrungsabschnitt 108 der Stufenbohrung 98 im Grundkörper 80 hat an seinem offenen Ende einen Hinterschnitt 116, der der Festlegung eines ringförmigen, für die Montage geschlitzten Sicherungselements 118 aus vorzugsweise Kunststoff am Zylindergehäuse 52 dient, welches an der in Fig. 1 linken Stirnfläche der Laufhülse 100 anliegt und somit die Laufhülse 100 im Grundkörper 80 des Zylindergehäuses 52 sichert. Im zweiten Bohrungsabschnitt 110 der Stufenbohrung 98 des Grundkörpers 80 ist der durchmessergrößere Hülsenabschnitt 102 der Laufhülse 100 eng aufgenommen, der mit seiner Innenumfangsfläche die den Druckraum 60 begrenzende Umfangswand 64 ausbildet. An den zweiten Bohrungsabschnitt 110 schließt sich der dritte Bohrungsabschnitt 112 der Stufenbohrung 98 über eine Ringschulter 120 an, an welcher der Ringabschnitt 106 der Laufhülse 100 anliegt. Im dritten Bohrungsabschnitt 112 der Stufenbohrung 98 im Grundkörper 80 ist der durchmesserkleinere Hülsenabschnitt 104 der Laufhülse 100 eng aufgenommen. Dabei ist der Hülsenabschnitt 104 außenumfangsseitig mit einer Radialnut 122 zur Aufnahme eines O-Rings 124 versehen, welcher für eine statische Abdichtung zwischen dem dritten Bohrungsabschnitt 112 des Grundkörpers 80 und dem Hülsenabschnitt 104 der Laufhülse 100 sorgt. An den dritten Bohrungsabschnitt 112 schließt sich über eine weitere Ringschulter 126 der vierte Bohrungsabschnitt 114 des Grundkörpers 80 an, wobei die Abmessungen des durchmesserkleineren Hülsenabschnitts 104 der Laufhülse 100 einerseits und der dritten und vierten Bohrungsabschnitte 112, 114 der Stufenbohrung 98 andererseits so aufeinander abgestimmt sind, dass eine ringförmige Stirnfläche 128 des Hülsenabschnitts 104 der Laufhülse 100 einen geringen axialen Abstand zur Ringschulter 126 des Grundkörpers 80 aufweist und über diese zur nachfolgend noch näher beschriebenen Befestigung des Einsatzteils 68 im Druckanschluss 66 nach radial innen vorsteht. Der vierte Bohrungsabschnitt 114 der Stufenbohrung 98 im Grundkörper 80 ist ferner innenumfangsseitig mit einer Mehrzahl von, hier z.B. vier sich in axialer Richtung des Zylindergehäuses 52 erstreckenden Längsrippen (in Fig. 1 nicht zu erkennen) versehen, die nach radial innen vorstehen, ungleichmäßig bzw. asymmetrisch über dem Umfang des vierten Bohrungsabschnitts 114 verteilt sind und einer Drehwinkelorientierung des Einsatzteils 68 im Druckanschluss 66 dienen, wie nachfolgend ebenfalls noch näher erläutert werden wird. An dem in Fig. 1 rechten Ende des vierten Bohrungsabschnitts 114 der Stufenbohrung 98 mündet schließlich eine im Grundkörper 80 ausgebildete, durchmesserkleinere Druckanschlussbohrung 130 im vierten Bohrungsabschnitt 114.

Aus der obigen Beschreibung ist ersichtlich, dass die Druckanschlussbohrung 130, der vierte Bohrungsabschnitt 114 der Stufenbohrung 98 sowie der in deren drittem Bohrungsabschnitt 112 aufgenommene Hülsenabschnitt 104 der Laufhülse 100 Bestandteil des Druckanschlusses 66 sind, über den der Druckraum 60 des Nehmerzylinders 50 mit dem Druckmittel beaufschlagt werden kann. Infolge der durch den O-Ring 124 bewirkten statischen Abdichtung am Außenumfang des durchmesserkleineren Hülsenabschnitts 104 der Laufhülse 100 erfährt diese bei einer Druckbeaufschlagung des Druckraums 60 über den Druckanschluss 66, bei welcher der hydraulische Druck zum einen auf die ringförmige Stirnfläche 128 des Hülsenabschnitts 104 und zum anderen auf die dieser gegenüber flächengrößeren, dem Druckraum 60 zugewandten Stirnfläche des Ringabschnitts 106 der Laufhülse 100 wirkt, eine resultierende Kraft nach rechts in Fig. 1, die bestrebt ist, die Laufhülse 100 in der Stufenbohrung 98 des Grundkörpers 80 zu halten, die Befestigung der Laufhülse 100 im Grundkörper 80 mittels des Sicherungselements 118 also entlastet.

Wie der Fig. 1 des Weiteren zu entnehmen ist, weist der mit geringem Radialspiel im durchmessergrößeren Hülsenabschnitt 102 der Laufhülse 100 des Zylindergehäuses 52 geführte, im dargestellten Ausführungsbeispiel metallische Kolben 56 am Außenumfang eine Radialnut 132 zur Aufnahme eines Nutrings 134 auf. Der elastomere Nutring 134 liegt in an sich bekannter Weise mit seiner außenumfangsseitigen Dichtlippe unter einer gewissen Vorspannung an der Umfangswand 64 des Zylindergehäuses 52 an und sorgt somit für eine dynamische Abdichtung des Druckraums 60 nach links in Fig. 1.

Auf der in Fig. 1 linken Seite ist der Kolben 56 ferner mit einer mittigen Aussparung 136 versehen, in der ein am in Fig. 1 rechten Ende der Kolbenstange 58 ausgebildeter Kugelkopf 138 mittels eines Sicherungselements 140 gelenkig gehalten ist, so dass die Kolbenstange 58 bezüglich des Kolbens 56 eine gewisse Winkelbeweglichkeit hat. Anstelle der in Fig. 1 gezeigten Ausgestaltung der Kolbenbaugruppe 54 könnte diese auch einteilig ausgebildet sein, mit einer zur Kolbenstange hin konisch oder ballig abfallenden Kolbenaußenfläche zur Gewährleistung der Winkelbeweglichkeit, wie es prinzipiell aus der DE 43 22 969 A1 oder der DE 43 31 241 A1 bekannt ist.

Die im dargestellten Ausführungsbeispiel metallische Kolbenstange 58 hat auf der in Fig. 1 linken Seite ein profiliertes Ende 142, auf das ein Endstück 144 aus Kunststoff aufgespritzt ist, welches eine im Wesentlichen sphärische Endfläche 146 aufweist, über die die Kolbenstange 58 betätigungswirksam am Kupplungshebel (nicht gezeigt) angreift. Am in Fig. 1 rechten Ende des Endstücks 144 bildet dieses einen Ringbund 148 der Kolbenstange 58 aus, der zum einen der Anbindung der Schutzkappe 92 an der Kolbenstange 58 dient, wobei der Ringbund 148 formschlüssig in einer im Wesentlichen komplementär geformten Ringaussparung 150 in einem Befestigungsabschnitt 152 der Schutzkappe 92 eingreift, der sich auf der vom Druckraum 60 abgewandten Seite der Schutzkappe 92 an den Faltenbalgabschnitt 90 der Schutzkappe 92 anschließt. Zum anderen bildet der Ringbund 148 der Kolbenstange 58 mit seiner dem Druckraum 60 zugewandten Stirnseite ein Widerlager für die Schraubendruckfeder 96 aus, wobei von dem dem Ringbund 148 zugewandten Ende der vorgespannten Schraubendruckfeder 96 auch eine gewisse radiale Zentrierwirkung für die Kolbenstange 58 ausgeht, die bei der Montage des Nehmerzylinders 50 im Kraftfahrzeug von Vorteil ist.

Der Fig. 1 ist ferner zu entnehmen, dass das Sicherungselement 118 zum Halten der Laufhülse 100 im Zylindergehäuse 52 auf seiner vom Druckraum 60 abgewandten Seite mit einer Axialnut 154 versehen ist, die als weiteres Widerlager und zur Zentrierung des dem Druckraum 60 zugewandten, in Fig. 1 rechten Endes der Schraubendruckfeder 96 dient, welche sich im Durchmesser ausgehend vom Ringbund 148 der Kolbenstange 58 zur Axialnut 154 hin im Wesentlichen konisch erweitert, also kegelstumpfförmig ausgebildet ist. Durch diese "Herausverlagerung" der Schraubendruckfeder 96 aus dem Druckraum 60 und der Laufhülse 100 hin zu der gezeigten Stellung zwischen Sicherungselement 118 und Ringbund 148 an der Kolbenstange 58 kann gegenüber vorbekannten Konstruktionen vorteilhaft das Verhältnis von Hub- zu Totraumvolumen - oder Istvolumen in der dargestellten (Einbau)Grundstellung des Kolbens 56 - des Druckraums 60 verringert werden, was letztendlich eine sehr kurze axiale Baulänge des eigentlichen Zylindergehäuses 52 bedingt. Darüber hinaus wird, da der Druckraum 60 keine Kolbenrückstellfeder aufzunehmen hat, an der sich Luftblasen "festsetzen" könnten, der Druckraum 60 bei einem Rücklauf des Kolbens 56 aus einer Betätigungsstellung in seine Grundstellung vom Druckmittel gut durchspült bzw. entleert, was zu einer sehr guten Entlüftung des Nehmerzylinders 50 beiträgt.

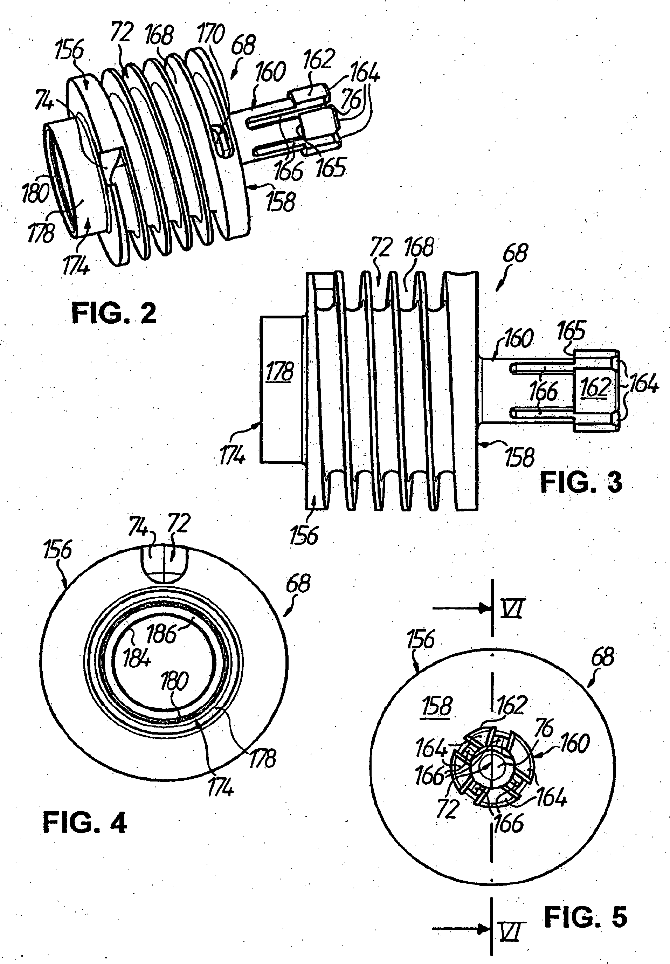

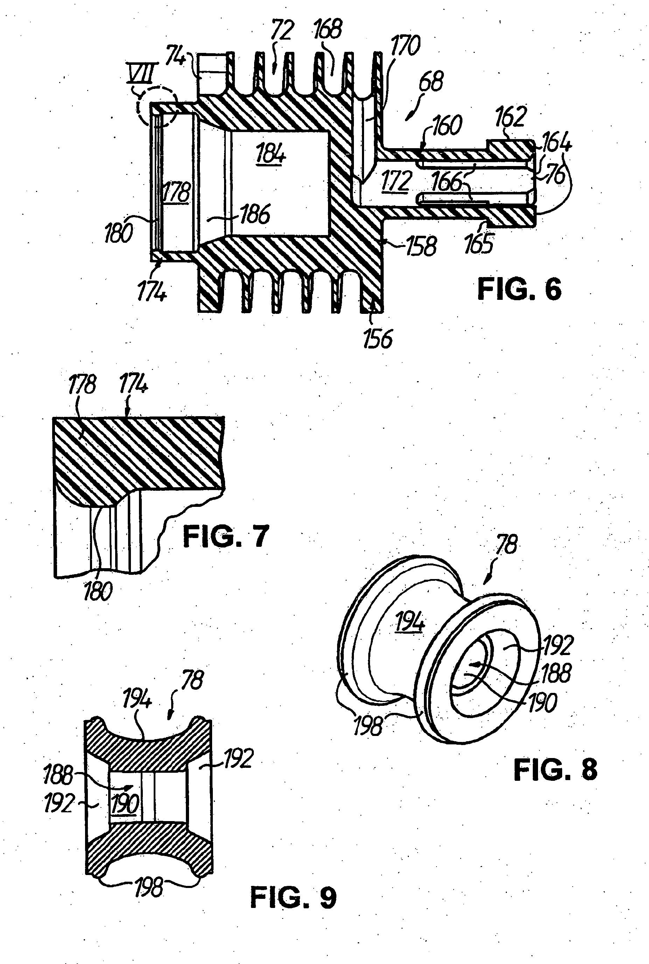

Den Fig. 2 bis 9 sind weitere Details der Vorrichtung 70 zur Reduzierung von Druckpulsationen, namentlich zu dem aus einem geeigneten Kunststoff, etwa aus einem glasfaserverstärkten Polyamid 66 spritzgegossenen Einsatzteil 68 (Fig. 2 bis 7) und dem darin gehaltenen, elastomeren Volumenaufnehmer 78 (Fig. 8 und 9) zu entnehmen.

Gemäß insbesondere den Fig. 1 und 6 ist das Einsatzteil 68 im Wesentlichen topfförmig ausgebildet, mit einem Mantelabschnitt 156, dessen Außendurchmesser im Wesentlichen dem Innendurchmesser der Umfangswand 64 des Zylindergehäuses 52 entspricht, und einem Boden 158, an dem sich ein im Wesentlichen hohlzylindrischer Fortsatz 160 anschließt, der in dem Druckanschluss 66 des Zylindergehäuses 52 eingesteckt ist.

Genauer gesagt ist das Einsatzteil 68 axial formschlüssig im Druckanschluss 66 des Zylindergehäuses 52 befestigt, nämlich mittels einer Schnappverbindung. Hierfür ist der Fortsatz 160 des Einsatzteils 68 ausgehend von seinem freien Ende am Außenumfang mit einem segmentierten Ringbund 162 versehen und zur Bildung einer Mehrzahl von Federarmen 164 (siehe insbesondere die Fig. 2, 3, 5 und 6) mehrfach längsgeschlitzt, wobei eine durch den Ringbund 162 des Fortsatzes 160 gebildete, zum Druckraum 60 hingewandte Widerlagerfläche 165 gemäß Fig. 1 die über den vierten Bohrungsabschnitt 114 der Stufenbohrung 98 im Grundkörper 80 nach radial innen überstehende, ringförmige Stirnfläche 128, welche vom durchmesserkleineren Hülsenabschnitt 104 der Laufhülse 100 gebildet ist, im Druckanschluss 66 des Zylindergehäuses 52 schnapphakenartig hintergreift. Gemäß insbesondere Fig. 5 sind es vier sich in Längsrichtung des Fortsatzes 160 erstreckende Schlitze 166, die im dargestellten Ausführungsbeispiel den Fortsatz 160 des Einsatzteils 68 unterbrechen und deren asymmetrische Verteilung über dem Umfang des Fortsatzes 160 der Verteilung der oben erwähnten Längsrippen (nicht gezeigt) im vierten Bohrungsabschnitt 114 der Stufenbohrung 98 im Grundkörper 80 des Zylindergehäuses 52 entspricht. Hierbei sind die Schlitze 166 im Fortsatz 160 des Einsatzteils 68 einerseits und die Längsrippen im Grundkörper 80 des Zylindergehäuses 52 andererseits maßlich derart aufeinander abgestimmt, dass im montierten Zustand des Einsatzteils 68 die gehäuseseitigen Längsrippen mit geringem Umfangsspiel in die Schlitze 166 eingreifen, dabei aber nicht nach radial innen über die Federarme 164 vorstehen. Die asymmetrische, aufeinander abgestimmte Umfangsverteilung der Längsrippen / Schlitze 166 sorgt auf einfache Weise für eine eindeutige Drehwinkelorientierung des montierten Einsatzteils 68 im Nehmerzylinder 50, nämlich derart, dass sich die druckraumseitige Öffnung 74 des Kanals 72 der Vorrichtung 70 zur Reduzierung von Druckpulsationen in der Einbaulage des Nehmerzylinders 50 oben nahe der durch die Umfangswand 64 gebildeten Innenumfangsfläche des Zylindergehäuses 52 befindet, wie in Fig. 1 gezeigt.

Zur vorzugsweise automatisierten Herstellung der vorbeschriebenen Schnappverbindung zwischen dem Zylindergehäuse 52 und dem bezüglich des Zylindergehäuses 52 winkelorientierten Einsatzteil 68 wird Letzteres ausgehend vom offenen Ende des mit der Laufhülse 100 ausgekleideten Zylindergehäuses 52 in die Laufhülse 100 eingeschoben bis die Federarme 164 des Fortsatzes 160 an einer kleinen Schräge zwischen dem Ringabschnitt 106 und dem Innenumfang des durchmesserkleineren Hülsenabschnitts 104 der Laufhülse 100 zur Anlage gelangen. Bei der weiteren axialen Relativverschiebung des Einsatzteils 68 bezüglich des Zylindergehäuses 52 federn die Federarme 164 nach radial innen. In der Folge fädeln sich die Längsrippen (nicht gezeigt) im vierten Bohrungsabschnitt 114 des Grundkörpers 80 des Zylindergehäuses 52 in den Schlitzen 166 des Fortsatzes 160 des Einsatzteils 68 ein, bevor die Federarme 164 wieder nach radial außen auffedern und mit ihrer segmentierten Widerlagerfläche 165 hinter der ringförmigen Stirnfläche 128 des Hülsenabschnitts 104 verrasten. Im Wesentlichen gleichzeitig kommt der Boden 158 des Einsatzteils 68 mit seiner dem Druckanschluss 66 zugewandten Stirnseite an der dem Druckraum 60 zugewandten Stirnfläche des Ringabschnitts 106 der Laufhülse 100 zur Anlage. Da sowohl der Übergang von der dem Druckanschluss 66 zugewandten Stirnfläche der Federarme 164 zu deren Außenumfangsfläche als auch der Übergang der dem Druckraum 60 zugewandten Stirnfläche der Längsrippen (nicht dargestellt) zu deren Innenumfangsfläche rechtwinklig, nur mit einer gebrochenen Kante, d.h. ohne Schräge ausgeführt ist, lässt sich das Einsatzteil 68 zum Zylindergehäuse 52 nur bei korrekter Winkelorientierung dieser Teile zueinander fügen. Bei dem Versuch, ein nicht oder inkorrekt winkelorientiertes Einsatzteil 68 zum Zylindergehäuse 52 zu fügen, stoßen die einander zugewandten Stirnflächen an den Federarmen 164 einerseits und den Längsrippen (nicht gezeigt) andererseits im Wesentlichen flächig aufeinander und verhindern somit eine weitere axiale Verschiebung des Einsatzteils 68 bezüglich des Zylindergehäuses 52. Da im Übrigen die Winkelorientierung des Einsatzteils 68 bezüglich des Zylindergehäuses 52 an dessen Grundkörper 80 erfolgt, wird eine in Umfangsrichtung wirkende Fixierung der Laufhülse 100 im Grundkörper 80 nicht benötigt.

Wie insbesondere den Fig. 1 und 6 zu entnehmen ist, weist der Kanal 72 im Einsatzteil 68 einen schraubengewindeartig verlaufenden Wendelabschnitt 168 auf, der über einen im Boden 158 des Einsatzteils 68 in radialer Richtung verlaufenden Verbindungsabschnitt 170 mit einem durch den Fortsatz 160 des Einsatzteils 68 gebildeten, in axialer Richtung verlaufenden Endabschnitt 172 verbunden ist, so dass der Wendelabschnitt 168 sowohl mit der nehmerzylinderseitigen Öffnung 74 als auch mit der geberzylinderseitigen Öffnung 76 des Kanals 72 kommuniziert. Dabei ist der Wendelabschnitt 168 des Kanals 72 am Außenumfang des Mantelabschnitts 156 des Einsatzteils 68 vorzugsweise spritzgießtechnisch als Nut ausgebildet, die im montierten Zustand des Einsatzteils 68 nach radial außen von der durch die Umfangswand 64 gebildeten Innenumfangsfläche des Zylindergehäuses 52 abgedeckt ist. Im dargestellten Ausführungsbeispiel umfasst der Wendelabschnitt 168 fünf vollständige Windungen; es ist jedoch ersichtlich, dass der Wendelabschnitt den jeweiligen funktionalen Erfordernissen entsprechend auch mehr oder weniger Windungen umfassen kann, was sich - ebenso wie andere, von der gezeigten, im Wesentlichen rechteckigen Querschnittsform abweichende Querschnittsformen des Wendelabschnitts - leicht spritzgießtechnisch bewerkstelligen lässt. Der Querschnitt bzw. die Querschnittsfläche des Wendelabschnitts 168 des Kanals 72 ist vorzugsweise so zu wählen, dass er/sie kleiner oder gleich dem minimalen Querschnitt des Druckanschlusses 66 ist, der im dargestellten Ausführungsbeispiel durch die Druckanschlussbohrung 130 definiert ist.

Gemäß insbesondere den Fig. 1, 6 und 7 weist das Einsatzteil 68 ferner an seinem druckraumseitigen Ende einen Fesselabschnitt 174 auf, welcher mit einem druckraumseitigen Fortsatz 176 des Kolbens 56 dergestalt zusammenwirkt, dass der Kolben 56 vor einer Druckmittelbefüllung oder ersten Betätigung des Nehmerzylinders 50 in einer vorbestimmten Hubstellung bezüglich des Zylindergehäuses 52 fixiert und mit der Druckmittelbefüllung bzw. ersten Betätigung des Nehmerzylinders 50 gegenüber dem Zylindergehäuse 52 freigebbar ist. Genauer gesagt umfasst der Fesselabschnitt 174 des Einsatzteils 68 einen sich an dessen Mantelabschnitt 156 in Fig. 1 nach links anschließenden, bezüglich einer Mittelachse des Druckraums 60 axial ausgefluchteten Hohlzylinder 178 mit einem innenumfangsseitig umlaufenden, nach radial innen vorspringenden Ringwulst 180, der in Fig. 7 vergrößert gezeigt ist, während der zentrische Fortsatz 176 am Kolben 56 außenumfangsseitig mit einem Ringbund 182 (siehe Fig. 1) versehen ist, der eine sich zum Druckanschluss 66 hin geringfügig verjüngende Außenfläche aufweist und im am Einsatzteil 68 fixierten Zustand des Kolbens 56 den Ringwulst 180 formschlüssig hintergreift. Hierfür sind der gemäß insbesondere Fig. 7 zum Druckraum 60 hin abgerundete Ringwulst 180 einerseits und der Ringbund 182 andererseits maßlich derart aufeinander abgestimmt, dass der lichte Innendurchmesser des Ringwulstes 180 geringfügig kleiner ist als der größte Außendurchmesser des Ringbunds 182, während dessen Abstand zur Stirnfläche des Kolbens 56 geringfügig größer ist als die axiale Länge des Ringwulstes 180.

Zur Fesselung der Kolbenbaugruppe 54 am Einsatzteil 68 beim Zusammenbau des Nehmerzylinders 50 wird die Kolbenbaugruppe 54 gegen die Kraft der Schraubendruckfeder 96 soweit im Sinne einer Verkleinerung des Druckraums 60 in das Zylindergehäuse 52 hinein geschoben bis der Fortsatz 176 am Kolben 56 mit seinem zum Einsatzteil 68 hin abgeschrägten Ringbund 182 an dem dem Druckraum 60 zugewandten, abgerundeten Ringwulst 180 zur Anlage gelangt. Bei einer weiteren axialen Relativverschiebung der Kolbenbaugruppe 54 bezüglich des Zylindergehäuses 52 in Richtung des Druckanschlusses 66 weitet der Ringbund 182 am Kolbenfortsatz 176 den Ringwulst 180 des Fesselabschnitts 174 elastisch nach radial außen auf. Nach Überdrücken des Ringwulstes 180 schnappt dieser infolge der elastischen Eigenschaften des Materials des Einsatzteils 68 hinter dem Ringbund 182, also in dem Ringspalt zwischen dem Ringbund 182 und der dem Druckraum 60 zugewandten Stirnfläche des Kolbens 56 ein. Die Kolbenbaugruppe 54 ist nun formschlüssig am Fesselabschnitt 174 des Einsatzteils 68 fixiert.

Da somit die Kolbenbaugruppe 54 in einer Stellung gefesselt ist, in der sie so weit wie möglich in das Zylindergehäuse 52 hineingeschoben ist, benötigt der Nehmerzylinder 50 bei der Lagerung, dem Transport und der Montage im Kraftfahrzeug nur einen geringen Raum. Darüber hinaus kann der Nehmerzylinder 50 im Wesentlichen kraftfrei im Kraftfahrzeug montiert werden, weil die Schraubendruckfeder 96 nicht zusammengedrückt werden muss, vielmehr vermittels der durch das Einsatzteil 68 bewirkten Fesselung der Kolbenbaugruppe 54 in einer vorgespannten Stellung gehalten ist.

Für die erste Betätigung des im Kraftfahrzeug montierten Nehmerzylinders 50 wird das Druckmittel über den Druckanschluss 66 dem Druckraum 60 zugeführt. Infolge des sich hierbei im Druckraum 60 aufbauenden Drucks, der an der Wirkfläche des Kolbens 56 angreift, erfährt der Kolben 56 eine in Fig. 1 nach links gerichtete Kraft, die sich der Kraft der Schraubendruckfeder 96 aufaddiert. Übersteigt die Summe dieser Kräfte die Haltekraft der Verbindung zwischen dem Fortsatz 176 des Kolbens 56 und dem Fesselabschnitt 174 des Einsatzteils 68 wird der Ringwulst 180 am Fesselabschnitt 174 über den Ringbund 182 am Fortsatz 176 wieder aufgedehnt, worauf die Kolbenbaugruppe 54 vom Einsatzteil 68 freikommt. Eine weitere Fesselung der Kolbenbaugruppe 54 im Betrieb des Nehmerzylinders 50 ist nicht vorgesehen und kann auch nicht erfolgen, da der in Fig. 1 gezeigte axiale Abstand zwischen dem Fortsatz 176 am Kolben 56 und dem Fesselabschnitt 174 am Einsatzteil 68 im Betrieb des Nehmerzylinders 50 nicht mehr unterschritten wird.

Aus der obigen Beschreibung ist ersichtlich, dass die Haltekraft der Verbindung zwischen dem Fortsatz 176 des Kolbens 56 und dem Fesselabschnitt 174 des Einsatzteils 68 konstruktiv derart ausgelegt ist, dass sie einerseits hinreichend größer ist als die Federkraft der Schraubendruckfeder 96, um ein ungewolltes Lösen der Fesselung der Kolbenbaugruppe 54 zu verhindern, andererseits aber ausreichend kleiner als die Haltekraft der Verbindung zwischen dem Einsatzteil 68 und dem Zylindergehäuse 52, so dass das Einsatzteil 68 bei der Erstbetätigung des Nehmerzylinders 50 nicht aus dem Druckanschluss 66 hinausgezogen wird.

Wie des Weiteren der Fig. 1 zu entnehmen ist, ist der Volumenaufnehmer 78 am Innenumfang des Mantelabschnitts 156 des Einsatzteils 68 montiert, so dass der Wendelabschnitt 168 des Kanals 72 den Volumenaufnehmer 78 koaxial umgibt. Hierfür weist das Einsatzteil 68 eine zylindrische Sackbohrung 184 auf, an die sich in den Fig. 1 und 6 nach links ein sich konisch erweiternder Fügeabschnitt 186 für den Volumenaufnehmer 78 anschließt, der mit einer kleinen Stufe am Hohlzylinder 178 endet.

Bei dem in den Fig. 8 und 9 näher gezeigten Volumenaufnehmer 78 handelt es sich um ein gummielastisches, im Wesentlichen spulenförmiges Element, welches eine Durchgangsbohrung 188 hat, mit einem mittigen Zylinderabschnitt 190 und zu beiden Seiten des Zylinderabschnitts 190 gelegenen Öffnungstrichtern 192. Außenumfangsseitig ist der bezüglich seiner Längsachse rotationssymmetrisch und bezüglich einer gedachten, zu der Längsachse senkrechten Ebene spiegelsymmetrisch ausgebildete Volumenaufnehmer 78 mit einer hohlkehlenförmigen Ringaussparung 194 versehen, die gemäß Fig. 1 im Bereich der Sackbohrung 184 zusammen mit dem Innenumfang des Mantelabschnitts 156 des Einsatzteils 68 eine ringförmige Luftkammer 196 begrenzt. Die Luftkammer 196 ist zu beiden Seiten, d.h. in Fig. 1 nach rechts bzw. links durch ringförmige Dichtwulste 198 (siehe die Fig. 8 und 9) des Volumenaufnehmers 78 abgedichtet. Die Wirkungsweise dieses Volumenaufnehmers 78 wurde eingangs schon näher erläutert, so dass an dieser Stelle weitere Ausführungen hierzu entbehrlich erscheinen. In diesem Zusammenhang zu erwähnen ist schließlich noch, dass sich die dargestellte Anordnung bzw. Positionierung von Kanal 72 und Volumenaufnehmer 78, bei der der Volumenaufnehmer 78 dem die Leitungszusatzstrecke bildenden Kanal 72 vom Druckraum 60 aus gesehen hydraulisch vorgeschaltet ist, als besonders schwingungsdämpfend wirksam erwiesen hat.

Nachfolgend sollen unter Bezugnahme auf die Fig. 10 bis 17 das zweite, dritte und vierte Ausführungsbeispiel nur insoweit beschrieben werden, als sie sich von dem vorbeschriebenen ersten Ausführungsbeispiel unterscheiden.

Das in Fig. 10 gezeigte zweite Ausführungsbeispiel unterscheidet sich vom ersten Ausführungsbeispiel nur dahingehend, dass die Vorrichtung 70 zur Reduzierung von Druckpulsationen lediglich den Kanal 72 als Leitungszusatzstrecke aufweist, in der Sackbohrung 184 des gegenüber den Fig. 1 bis 7 unveränderten Einsatzteils 68 ein Volumenaufnehmer indes nicht eingesetzt ist.

Bei dem in Fig. 11 dargestellten dritten Ausführungsbeispiel hingegen ist ein Volumenaufnehmer 78 gemäß den Fig. 8 und 9 in der Sackbohrung 184 des Einsatzteils 68 eingesetzt. Dafür ist die Vorrichtung 70 zur Reduzierung von Druckpulsationen hier nicht mit einem eine Leitungszusatzstrecke bildenden Kanal im vorbeschriebenen Sinne versehen; es besteht quasi eine direkte, unverlängerte Verbindung zwischen Druckraum 60 und Druckanschluss 66, und zwar über einen querschnittsgroßen Ringraum 200, der innenumfangsseitig von dem Fesselabschnitt 174 und dem diesem gegenüber außendurchmessergleichen Außenumfang des Mantelabschnitts 156 des Einsatzteils 68 und außenumfangsseitig von der Umfangswand 64 des Zylindergehäuses 52 begrenzt ist, sowie über die Abschnitte 170 und 172 im Boden 158 bzw. Fortsatz 160 des Einsatzteils 68. Hierbei mündet der Verbindungsabschnitt 170 in der Einbaulage des Nehmerzylinders 50 oben, nahe der Umfangswand 64 des Zylindergehäuses 52 im Ringraum 200, um eine gute Entlüftung des Druckraums 60 zu gewährleisten.

Erwartungsgemäß haben die Vorrichtungen 70 zur Reduzierung von Druckpulsationen nach den Ausführungsbeispielen gemäß den Fig. 1, 10 und 11 verschiedene Schwingungsdämpfungseigenschaften, wie sich auch aus der Fig. 18 ergibt, die beispielhaft das Ergebnis von Versuchen illustriert, bei denen (1.) eine Sinusschwingung mit variabler Frequenz und einer Amplitude von 1 g an die Kolbenstange 58 des Nehmerzylinders 50 angelegt wurde, (2.) die Beschleunigungen an einer Kolbenstange (nicht gezeigt) des mit dem Nehmerzylinder 50 hydraulisch verbundenen Geberzylinders (nicht dargestellt) und an der Kolbenstange 58 gemessen und (3.) für die Versuchsauswertung zueinander ins Verhältnis gesetzt über der Erregerfrequenz in einem Diagramm aufgetragen wurden. Hierbei kamen ein Nehmerzylinder 50 mit einem effektiven Kolbenwirkdurchmesser von 22,20 mm und ein Geberzylinder mit einem effektiven Kolbenwirkdurchmesser von 19,05 mm zum Einsatz, die über eine ausgehend vom Nehmerzylinder 50 aus (a) einem elastomeren Kupplungsschlauchabschnitt (Innendurchmesser: ca. 6 mm, Außendurchmesser: ca. 12 mm, Länge: ca. 250 mm, eine Gewebelage) und (b) einem metallischen Kupplungsrohrabschnitt (Innendurchmesser: ca. 4,75 mm, Wandstärke: ca. 0,7 mm, Länge: ca. 610 mm) bestehende Druckleitungsanordnung hydraulisch miteinander verbunden waren. Bei den Ausführungsbeispielen gemäß den Fig. 1 und 10 betrug die Länge des Wendelabschnitts 168 des Kanals 72 der Vorrichtung 70 zur Reduzierung von Druckpulsationen ca. 200 mm, mit einem offenen Querschnitt von ca. 6 mm², während bei den Ausführungsbeispielen gemäß den Fig. 1 und 11 als Volumenaufnehmer 78 ein Gummidichtstopfen entsprechend den Fig. 8 und 9 mit einer Gesamtlänge von ca. 7,3 mm, einem maximalen Außendurchmesser von ca. 9,6 mm im Bereich der Dichtwulste 198 und einem Innendurchmesser von ca. 3 mm im Bereich des Zylinderabschnitts 190 zum Einsatz kam.

Das unterschiedliche Schwingungsdämpfungsvermögen der verschiedenen getesteten Vorrichtungen 70 zur Reduzierung von Druckpulsationen sowie deren Wirkungen im Vergleich zu der Anordnung ohne Vorrichtung zur Reduzierung von Druckpulsationen (Markierung mit Dreiecken) ist in Fig. 18 klar ersichtlich: Sowohl bei dem Ausführungsbeispiel gemäß Fig. 10 (Markierung mit Rauten) als auch bei dem Ausführungsbeispiel gemäß Fig. 11 (Markierung mit Sternchen) kommt es zu einer Verkleinerung und Verlagerung des ersten Maximums (bei ca. 65 Hz) zu niedrigeren Frequenzen, wobei der Volumenaufnehmer 78 alleine eine bessere Dämpfungswirkung hervorruft als der Kanal 72 alleine; bei höheren Frequenzen nimmt die Dämpfungswirkung des Kanals 72 verglichen zum Volumenaufnehmer 78 tendenziell zu. Die Kombination beider Maßnahmen entsprechend dem Ausführungsbeispiel gemäß Fig. 1 (Markierung mit nicht ausgefüllten Quadraten) führt zu einem Gesamtdämpfungseffekt, der noch deutlich über die Einzeleffekte in Summe hinausgeht: Sämtliche Schwingungsmaxima werden stark "gedrückt", wenigstens um ca. 50%; auch hier erfolgt eine Verschiebung des ersten Maximums hin zu niedrigeren Frequenzen. Für den Fachmann ist klar, dass diese Ergebnisse nur beispielhaft zu verstehen sind und die Vorrichtung 70 zur Reduzierung von Druckpulsationen im Hinblick auf ihre Schwingungsdämpfungswirkung für die jeweilige Einbausituation natürlich wie hinsichtlich des Amplitudenverhältnisses bzw. des zu dämpfenden Frequenzbereichs gewünscht optimiert werden kann, sei es durch den wahlweisen Einsatz von Kanal 72 und/oder Volumenaufnehmer 78 oder eine Änderung der Form/Abmessungen von Kanal 72 bzw. Volumenaufnehmer 78 oder des Werkstoffs des Volumenaufnehmers 78.

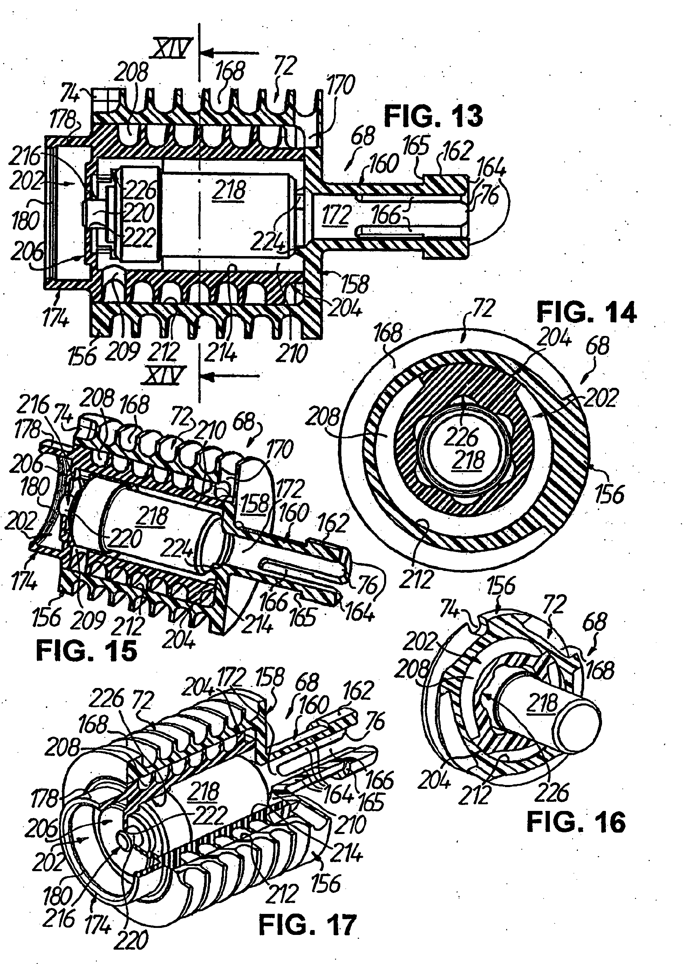

Bei dem in den Fig. 12 bis 17 dargestellten vierten Ausführungsbeispiel umfasst das wiederum im Druckraum 60 eingesetzte und im Druckanschluss 66 befestigte Einsatzteil 68 einen im Wesentlichen topfförmig ausgebildeten Inneneinsatz 202, mit (siehe insbesondere die Fig. 13, 15 und 17) einem Inneneinsatz-Mantelabschnitt 204 und einem Inneneinsatzboden 206. Zwischen dem Mantelabschnitt 156 des Einsatzteils 68 und dem Inneneinsatz-Mantelabschnitt 204 ist eine schraubengewindeartig verlaufende Wendelabschnittsverlängerung 208 ausgebildet, deren eines Ende gemäß den Fig. 13 und 15 über den Verbindungsabschnitt 170 mit dem (äußeren) Wendelabschnitt 168 und deren anderes Ende über einen Durchgang 209 mit einem Innenraum 210 des Inneneinsatzes 202 fluidverbunden ist, welcher seinerseits über den Endabschnitt 172 im Fortsatz 160 mit dem Druckanschluss 66 kommuniziert. Dabei ist die Wendelabschnittsverlängerung 208 am Außenumfang des Inneneinsatz-Mantelabschnitts 204 wiederum als Nut ausgebildet, die nach radial außen von einer Innenumfangsfläche 212 des Mantelabschnitts 156 des Einsatzteils 68 abgedeckt ist. Der ebenfalls aus einem geeigneten Kunststoff spritzgegossene Inneneinsatz 202 ist so in das Einsatzteil 68 eingesteckt und darin befestigt (z.B. geklebt oder ultraschallverschweißt), dass der Inneneinsatz-Mantelabschnitt 204 am Boden 158 des Einsatzteils 68 anliegt, wodurch die einander gegenüberliegenden Böden 158 und 206 den Innenraum 210 in axialer Richtung begrenzen, während der Innenraum 210 nach radial außen von einer Innenumfangsfläche 214 des Inneneinsatz-Mantelabschnitts 204 begrenzt wird. Auf der dem Druckraum 60 zugewandten Seite des Inneneinsatzbodens 206 ist der Hohlzylinder 178 des Fesselabschnitts 174 am Inneneinsatz 202 angeformt.

Wie sich aus einem Vergleich z.B. der Fig. 1 (6) und 12 (13) ergibt, ist bei dem vierten Ausführungsbeispiel - aufgrund der Wendelabschnittsverlängerung 208 und des Umstands, dass der Wendelabschnitt 168 am Mantelabschnitt 156 des Einsatzteils 68 eine größere Anzahl von Windungen (hier sieben vollständige Windungen) umfasst - der Kanal 72 deutlich länger als der Kanal 72 beim ersten Ausführungsbeispiel und weist darüber hinaus einen kleineren freien Querschnitt auf. Bei einer derartigen Ausgestaltung des Kanals 72 kann es insbesondere bei niedrigen Temperaturen, bei denen das Hydraulikmedium - in der Regel Bremsflüssigkeit - relativ zähflüssig ist, aufgrund des höheren Strömungswiderstands zu einer unerwünschten Vergrößerung der am Kupplungspedal aufzubringenden Kraft bei schneller Betätigung und zu einer ebenso unerwünschten Abnahme der Rücklaufgeschwindigkeit des Kupplungspedals kommen. Um dieser Problematik zu begegnen, ist im Einsatzteil 68 ein bezüglich der Vorrichtung 70 zur Reduzierung von Druckpulsationen hydraulisch parallel geschaltetes, thermostatisch arbeitendes Bypassventil 216 vorgesehen, das bei niedrigen Temperaturen für eine direkte Fluidverbindung zwischen dem Druckraum 60 und dem Druckanschluss 66 sorgt und diese Fluidverbindung bei höheren Temperaturen unterbricht.

Wie insbesondere den Fig. 13, 15 und 17 zu entnehmen ist, weist das Bypassventil 216 ein im Innenraum 210 des Inneneinsatzes 202 zwischen dem Boden 158 des Einsatzteils 68 und dem Inneneinsatzboden 206 aufgenommenes Thermostatelement 218 auf, welches mit einem Stößel 220 wirkverbunden ist, der eine Öffnung 222 im Inneneinsatzboden 206 temperaturabhängig öffnet oder verschließt (in den Figuren ist der verschlossene Zustand gezeigt), um bei niedrigen Temperaturen für die direkte Fluidverbindung zwischen dem Druckraum 60 und dem Druckanschluss 66 zu sorgen bzw. diese Fluidverbindung bei höheren Temperaturen zu unterbrechen. Hierbei stützt sich das Thermostatelement 218 auf der in Fig. 13 rechten Seite an mehreren, über den Umfang des Endabschnitts 172 verteilten Vorsprüngen 224 ab, die am Einsatzteil 68 angeformt sind und das Thermostatelement 218 vom Boden 158 beabstandet halten, so dass das Hydraulikmedium durch Durchgänge zwischen den einzelnen Vorsprüngen 224 vom Innenraum 210 zum Endabschnitt 172 und umgekehrt gelangen kann. Auf der in Fig. 13 linken Seite ist das Thermostatelement 218 mit einem verdickten Ende in einem Profilabschnitt 226 des Inneneinsatzes 202 gehalten, der einen in etwa blumenförmigen Querschnitt (siehe Fig. 14) aufweist, so dass das Hydraulikmedium zwischen dem Inneneinsatz-Mantelabschnitt 204 und dem Außenumfang des Thermostatelements 218 hindurchfließen kann.

Es ist ersichtlich, dass auch beim vierten Ausführungsbeispiel zwischen dem Druckraum 60 und dem Druckanschluss 66 stets eine hydraulische Verbindung besteht, und zwar ausgehend vom Druckraum 60 über die nehmerzylinderseitige Öffnung 74, den Wendelabschnitt 168, den Verbindungsabschnitt 170, die Wendelabschnittsverlängerung 208, den Durchgang 209, die freien Querschnitte zwischen dem Thermostatelement 218 und dem Inneneinsatz-Mantelabschnitt 204 bzw. dem Boden 158 des Einsatzteils 68, den Endabschnitt 172 und schließlich die geberzylinderseitige Öffnung 76. Bei niedrigen Temperaturen kommt es zu einer Längenänderung am Thermostatelement 218, wodurch der Stößel 220 in Richtung des Innenraums 210 aus der Öffnung 222 im Inneneinsatzboden 206 herausgezogen wird, so dass zusätzlich über den Hohlzylinder 178, die Öffnung 222, den Profilabschnitt 226 und weiter wie oben beschrieben eine Verbindung zwischen dem Druckraum 60 und dem Druckanschluss 66 geschaffen wird.

Im Zusammenhang mit dem vierten Ausführungsbeispiel erwähnt werden soll schließlich noch, dass auch bei diesem Ausführungsbeispiel ein Volumenaufnehmer (nicht dargestellt) ähnlich dem vorbeschriebenen Volumenaufnehmer 78 vorgesehen werden kann, z.B. mit angepasster Dimensionierung im Hohlzylinder 178.

Es wird ein Nehmerzylinder für ein schwingungsgedämpftes hydraulisches Kraftübertragungssystem, insbesondere eine hydraulische Kupplungsbetätigung für Kraftfahrzeuge offenbart, mit einem Zylindergehäuse, einem darin längsverschieblich aufgenommenen Kolben und einem Druckraum, der von dem Zylindergehäuse und dem Kolben begrenzt und wahlweise über einen im Zylindergehäuse vorgesehenen Druckanschluss mit einem Druckmittel beaufschlagbar ist, um den Kolben im Zylindergehäuse zu verschieben. Ferner ist ein in dem Druckraum eingesetztes, im Druckanschluss befestigtes Einsatzteil vorgesehen, das mit einer für das Druckmittel stets offenen Vorrichtung zur Reduzierung von Druckpulsationen ausgerüstet ist. Im Ergebnis sind die schwingungsdämpfenden Maßnahmen bzw. Mittel sehr kostengünstig und platzsparend im Nehmerzylinder integriert.

### BEZUGSZEICHENLISTE

- 10: hydraulische Kupplungsbetätigung
- 11: Pedalbock
- 12: Geberzylinder
- 14: Nehmerzylinder
- 16: Hydraulikleitung
- 18: erster Rohrabschnitt
- 20: Schlauchabschnitt
- 22: zweiter Rohrabschnitt
- 24: Ausgleichsbehälter
- 26: Kolbenstange
- 28: Kupplungspedal
- 30: Kolbenstange
- 32: Ausrückhebel
- 34: Ausrücklager
- 36: Ausrückmechanismus
- 38: Reibungskupplung
- 40: Kupplungsdruckplatte
- 42: Getriebewelle
- 43: Schwungscheibe
- 44: Kupplungsmitnehmerscheibe

- 50: Nehmerzylinder
- 52: Zylindergehäuse
- 54: Kolbenbaugruppe
- 56: Kolben
- 58: Kolbenstange
- 60: Druckraum
- 62: Gehäuseboden
- 64: Umfangswand
- 66: Druckanschluss
- 68: Einsatzteil
- 70: Vorrichtung zur Reduzierung von Druckpulsationen
- 72: Kanal
- 74: nehmerzylinderseitige Öffnung
- 76: geberzylinderseitige Öffnung
- 78: Volumenaufnehmer
- 80: Grundkörper
- 82: Befestigungsflansch
- 84: Befestigungsbohrung
- 86: Stahlbuchse
- 88: Radialnut
- 90: Faltenbalgabschnitt
- 92: Schutzkappe
- 94: Ringbund
- 96: Schraubendruckfeder
- 98: Stufenbohrung
- 100: Laufhülse
- 102: Hülsenabschnitt
- 104: Hülsenabschnitt
- 106: Ringabschnitt
- 108: Bohrungsabschnitt
- 110: Bohrungsabschnitt
- 112: Bohrungsabschnitt
- 114: Bohrungsabschnitt
- 116: Hinterschnitt
- 118: Sicherungselement
- 120: Ringschulter
- 122: Radialnut
- 124: O-Ring
- 126: Ringschulter
- 128: Stirnfläche
- 130: Druckanschlussbohrung
- 132: Radialnut
- 134: Nutring
- 136: Aussparung
- 138: Kugelkopf
- 140: Sicherungselement
- 142: Ende

- 144: Endstück
- 146: Endfläche
- 148: Ringbund
- 150: Ringaussparung
- 152: Befestigungsabschnitt
- 154: Axialnut
- 156: Mantelabschnitt
- 158: Boden
- 160: Fortsatz
- 162: Ringbund
- 164: Federarm
- 165: Widerlagerfläche
- 166: Schlitz
- 168: Wendelabschnitt
- 170: Verbindungsabschnitt
- 172: Endabschnitt
- 174: Fesselabschnitt
- 176: Fortsatz
- 178: Hohlzylinder
- 180: Ringwulst
- 182: Ringbund
- 184: Sackbohrung
- 186: Fügeabschnitt
- 188: Durchgangsbohrung
- 190: Zylinderabschnitt
- 192: Öffnungstrichter
- 194: Ringaussparung
- 196: Luftkammer
- 198: Dichtwulst
- 200: Ringraum
- 202: Inneneinsatz
- 204: Inneneinsatz-Mantelabschnitt
- 206: Inneneinsatzboden
- 208: Wendelabschnittsverlängerung
- 209: Durchgang

- 210: Innenraum
- 212: Innenumfangsfläche
- 214: Innenumfangsfläche
- 216: Bypassventil
- 218: Thermostatelement
- 220: Stößel
- 222: Öffnung
- 224: Vorsprung
- 226: Profilabschnitt

## Patentansprüche

1. Nehmerzylinder (50) für ein schwingungsgedämpftes hydraulisches Kraftübertragungssystem, insbesondere eine hydraulische Kupplungsbetätigung für Kraftfahrzeuge, mit einem Zylindergehäuse (52), einem darin längsverschieblich aufgenommenen Kolben (56) und einem Druckraum (60), der von dem Zylindergehäuse (52) und dem Kolben (56) begrenzt und wahlweise über einen im Zylindergehäuse (52) vorgesehenen Druckanschluss (66) mit einem Druckmittel beaufschlagbar ist, um den Kolben (56) im Zylindergehäuse (52) zu verschieben, **gekennzeichnet durch** ein in dem Druckraum (60) eingesetztes, im Druckanschluss (66) befestigtes Einsatzteil (68), das mit einer für das Druckmittel stets offenen Vorrichtung (70) zur Reduzierung von Druckpulsationen ausgerüstet ist.

2. Nehmerzylinder (50) nach Anspruch 1, **dadurch gekennzeichnet, dass** das Einsatzteil (68) im Wesentlichen topfförmig ausgebildet ist, mit einem Mantelabschnitt (156) und einem Boden (158), an dem sich ein im Wesentlichen hohlzylindrischer Fortsatz (160) anschließt, der in dem Druckanschluss (66) des Zylindergehäuses (52) eingesteckt ist.

3. Nehmerzylinder (50) nach Anspruch 1 oder 2, **dadurch gekennzeichnet, dass** das Einsatzteil (68) axial formschlüssig im Druckanschluss (66) des Zylindergehäuses (52) befestigt ist.

4. Nehmerzylinder (50) nach Anspruch 3, **dadurch gekennzeichnet, dass** das Einsatzteil (68) mittels einer Schnappverbindung im Druckanschluss (66) des Zylindergehäuses (52) befestigt ist.

5. Nehmerzylinder (50) nach den Ansprüchen 2 bis 4, **dadurch gekennzeichnet, dass** der Fortsatz (160) des Einsatzteils (68) ausgehend von seinem freien Ende am Außenumfang mit einem Ringbund (162) versehen und zur Bildung einer Mehrzahl von Federarmen (164) mehrfach längsgeschlitzt ist, wobei der Ringbund (162) am Fortsatz (160) im montierten Zustand des Einsatzteils (68) eine vom Druckraum (60) abgewandte, ringförmige Stirnfläche (128) im Druckanschluss (66) des Zylindergehäuses (52) hintergreift.

6. Nehmerzylinder (50) nach Anspruch 5, **dadurch gekennzeichnet, dass** das Zylindergehäuse (52) einen Grundkörper (80) aus Kunststoff hat, welcher mit einer Bohrung (98) versehen ist, in der eine metallische Laufhülse (100) für den Kolben (56) eingesetzt ist, wobei die vom Einsatzteil (68) hintergriffene, ringförmige Stirnfläche (128) im Druckanschluss (66) des Zylindergehäuses (52) durch ein Ende der Laufhülse (100) des Zylindergehäuses (52) ausgebildet ist.

7. Nehmerzylinder (50) nach einem der vorhergehenden Ansprüche, **dadurch gekennzeichnet, dass** die Vorrichtung (70) zur Reduzierung von Druckpulsationen eine Leitungszusatzstrecke in Form eines Kanals (72) mit einer druckraumseitigen Öffnung (74) und einer druckanschlussseitigen Öffnung (76) umfasst, wobei der Kanal (72) eine Länge aufweist, die ein Mehrfaches des direkten Abstands zwischen den beiden Öffnungen (74, 76) beträgt.

8. Nehmerzylinder (50) nach Anspruch 7, **dadurch gekennzeichnet, dass** der Kanal (72) einen schraubengewindeartig verlaufenden Wendelabschnitt (168) aufweist.

9. Nehmerzylinder (50) nach wenigstens den Ansprüchen 2 und 8, **dadurch gekennzeichnet, dass** der Wendelabschnitt (168) des Kanals (72) am Außenumfang des Mantelabschnitts (156) des Einsatzteils (68) als Nut ausgebildet ist, die nach radial außen von einer Innenumfangsfläche (64) des Zylindergehäuses (52) abgedeckt ist.

10. Nehmerzylinder (50) nach Anspruch 9, **dadurch gekennzeichnet, dass** der Kanal (72) einen durch den Fortsatz (160) des Einsatzteils (68) gebildeten Endabschnitt (172) aufweist, der mit dem Wendelabschnitt (168) durch einen im Boden (158) des Einsatzteils (68) verlaufenden Verbindungsabschnitt (170) des Kanals (72) verbunden ist.

11. Nehmerzylinder (50) nach einem der Ansprüche 8 bis 10, **dadurch gekennzeichnet, dass** der Wendelabschnitt (168) des Kanals (72) einen Querschnitt aufweist, der kleiner oder gleich dem minimalen Querschnitt des Druckanschlusses (66) ist.

12. Nehmerzylinder (50) nach einem der Ansprüche 7 bis 11, **dadurch gekennzeichnet, dass** sich die druckraumseitige Öffnung (74) des Kanals (72) in der Einbaulage des Nehmerzylinders (50) oben nahe der Innenumfangsfläche (64) des Zylindergehäuses (52) befindet.

13. Nehmerzylinder (50) nach einem der vorhergehenden Ansprüche, **dadurch gekennzeichnet, dass** die Vorrichtung (70) zur Reduzierung von Druckpulsationen einen am Einsatzteil (68) montierten Volumenaufnehmer (78) umfasst, der unter Druck elastisch verformbar ist.

14. Nehmerzylinder (50) nach wenigstens den Ansprüchen 2 und 13, **dadurch gekennzeichnet, dass** der Volumenaufnehmer (78) am Innenumfang des Mantelabschnitts (156) des Einsatzteils (68) montiert ist.

15. Nehmerzylinder (50) nach Anspruch 14, **dadurch gekennzeichnet, dass** es sich bei dem Volumenaufnehmer (78) um ein gummielastisches, spulenförmiges Element handelt, mit einer Durchgangsbohrung (188) und einer außenumfangsseitigen Ringaussparung (194), die zusammen mit dem Innenumfang des Mantelabschnitts (156) des Einsatzteils (68) eine ringförmige Luftkammer (196) begrenzt.

16. Nehmerzylinder (50) nach wenigstens den Ansprüchen 7 und 13, **dadurch gekennzeichnet, dass** der Volumenaufnehmer (78) dem die Leitungszusatzstrecke bildenden Kanal (72) vom Druckraum (60) aus gesehen hydraulisch vorgeschaltet ist.

17. Nehmerzylinder (50) nach wenigstens den Ansprüchen 8 und 13, **dadurch gekennzeichnet, dass** der Wendelabschnitt (168) des Kanals (72) den Volumenaufnehmer (78) koaxial umgibt.

18. Nehmerzylinder (50) nach wenigstens den Ansprüchen 2 und 8, **dadurch gekennzeichnet, dass** das Einsatzteil (68) einen im Wesentlichen topfförmig ausgebildeten Inneneinsatz (202) umfasst, mit einem Inneneinsatz-Mantelabschnitt (204) und einem Inneneinsatzboden (206), wobei zwischen dem Mantelabschnitt (156) des Einsatzteils (68) und dem Inneneinsatz-Mantelabschnitt (204) eine schraubengewindeartig verlaufende Wendelabschnittsverlängerung (208) ausgebildet ist, deren eines Ende mit dem Wendelabschnitt (168) und deren anderes Ende mit einem Innenraum (210) des Inneneinsatzes (202) fluidverbunden ist, welcher seinerseits mit dem Druckanschluss (66) kommuniziert.

19. Nehmerzylinder (50) nach Anspruch 18, **dadurch gekennzeichnet, dass** die Wendelabschnittsverlängerung (208) am Außenumfang des Inneneinsatz-Mantelabschnitts (204) als Nut ausgebildet ist, die nach radial außen von einer Innenumfangsfläche (212) des Mantelabschnitts (156) des Einsatzteils (68) abgedeckt ist.

20. Nehmerzylinder (50) nach einem der vorhergehenden Ansprüche, **dadurch gekennzeichnet, dass** im Einsatzteil (68) ein bezüglich der Vorrichtung (70) zur Reduzierung von Druckpulsationen hydraulisch parallel geschaltetes, thermostatisch arbeitendes Bypassventil (216) vorgesehen ist, das bei niedrigen Temperaturen für eine direkte Fluidverbindung zwischen dem Druckraum (60) und dem Druckanschluss (66) sorgt und diese Fluidverbindung bei höheren Temperaturen unterbricht.

21. Nehmerzylinder (50) nach wenigstens den Ansprüchen 18 und 20, **dadurch gekennzeichnet, dass** das Bypassventil (216) ein im Innenraum (210) des Inneneinsatzes (202) zwischen dem Boden (158) des Einsatzteils (68) und dem Inneneinsatzboden (206) aufgenommenes Thermostatelement (218) aufweist, welches mit einem Stößel (220) wirkverbunden ist, der eine Öffnung (222) im Inneneinsatzboden (206) temperaturabhängig öffnet oder verschließt, um bei niedrigen Temperaturen für die direkte Fluidverbindung zwischen dem Druckraum (60) und dem Druckanschluss (66) zu sorgen bzw. diese Fluidverbindung bei höheren Temperaturen zu unterbrechen.

22. Nehmerzylinder (50) nach einem der vorhergehenden Ansprüche, **dadurch gekennzeichnet, dass** das Einsatzteil (68) bzw. der Inneneinsatz (202) an seinem druckraumseitigen Ende einen Fesselabschnitt (174) aufweist, welcher mit einem druckraumseitigen Fortsatz (176) des Kolbens (56) dergestalt zusammenwirkt, dass der Kolben (56) vor einer Druckmittelbefüllung oder ersten Betätigung des Nehmerzylinder (50) in einer vorbestimmten Hubstellung bezüglich des Zylindergehäuses (52) fixiert und mit der Druckmittelbefüllung bzw. ersten Betätigung des Nehmerzylinders (50) gegenüber dem Zylindergehäuse (52) freigebbar ist.

23. Nehmerzylinder (50) nach Anspruch 22, **dadurch gekennzeichnet, dass** der Fesselabschnitt (174) des Einsatzteils (68) bzw. des Inneneinsatzes (202) einen bezüglich einer Mittelachse des Druckraums (60) axial ausgefluchteten Hohlzylinder (178) mit einem innenumfangsseitigen Ringwulst (180) aufweist, während der zentrische Fortsatz (176) am Kolben (56) außenumfangsseitig mit einem Ringbund (182) versehen ist, der im am Einsatzteil (68) bzw. Inneneinsatz (202) fixierten Zustand des Kolbens (56) den Ringwulst (180) hintergreift.

24. Nehmerzylinder (50) nach einem der vorhergehenden Ansprüche, **dadurch gekennzeichnet, dass** das Einsatzteil (68) aus einem Kunststoff spritzgegossen ist.

## Claims

1. Slave cylinder (50) for a vibration-damped hydraulic force transmission system, particularly a hydraulic clutch actuating system for motor vehicles, comprising a cylinder housing (52), a piston (56) received therein to be longitudinally displaceable and a pressure chamber (60), which is bounded by the cylinder housing (52) and the piston (56) and can be selectably acted on by a pressure medium, by way of a pressure connection (66) provided in the cylinder housing (52), in order to displace the piston (56) in the cylinder housing (52), **characterized by** an insert member (68) which is inserted in the pressure chamber (60) and secured in the pressure connection (66) and which is equipped with a device (70) for reducing pressure pulses, the device being constantly open to the pressure medium.

2. Slave cylinder (50) according to claim 1, **characterized in that** the insert member (68) is of substantially pot-shaped construction with a shroud section (156) and a base (158), with which a substantially hollow-cylindrical extension (160) inserted into the pressure connection (66) of the cylinder housing (52) is connected.

3. Slave cylinder (50) according to claim 1 or 2, **characterized in that** the insert member (68) is secured in the pressure connection (66) of the cylinder housing (52) by axial mechanically positive coupling.

4. Slave cylinder (50) according to claim 3, **characterized in that** the insert member (68) is secured in the pressure connection (66) of the cylinder housing (52) by means of a snap connection.

5. Slave cylinder (50) according to claims 2 to 4, **characterized in that** the extension (160) of the insert member (68) is provided at the outer circumference with an annular collar (162) extending from its free end and has multiple longitudinal slots for formation of a plurality of spring arms (164), wherein in the mounted state of the insert member (68) the annular collar (162) at the extension (160) engages behind an annular end surface (128), which faces away from the pressure chamber (60), in the pressure connection (66) of the cylinder housing (52).

6. Slave cylinder (50) according to claim 5, **characterized in that** the cylinder housing (52) comprises a base body (80) of plastics material provided with a bore (98) in which a metallic guide sleeve (100) for the piston (56) is inserted, wherein the annular end surface (128), behind which the insert member (68) engages, in the pressure connection (66) of the cylinder housing (52) is formed by an end of the guide sleeve (100) of the cylinder housing (52).

7. Slave cylinder (50) according to any one of the preceding claims, **characterized in that** the device (70) for reducing pressure pulses comprises an additional conduit path in the form of a channel (72) with an opening (74) at the pressure chamber side and an opening (76) at the pressure connection side, wherein the channel (72) has a length amounting to a multiple of the direct spacing between the two openings (74, 76).

8. Slave cylinder (50) according to claim 7, **characterized in that** the channel (72) has a helically extending helix section (168).

9. Slave cylinder (50) according to at least claims 2 and 8, **characterized in that** the helix section (168) of the channel (72) is formed at the outer circumference of the shroud section (156) of the insert member (68) as a groove which is radially outwardly covered by an inner circumferential surface (64) of the cylinder housing (52).

10. Slave cylinder (50) according to claim 9, **characterized in that** the channel (72) has an end section (172) which is formed by the extension (160) of the insert member (68) and which is connected with the helix section (168) by a connecting section (170) of the channel (72), the connecting section extending in the base (158) of the insert member (68).

11. Slave cylinder (50) according to any one of claims 8 to 10, **characterized in that** the helix section (168) of the channel (72) has a cross-section smaller than or equal to the minimum cross-section of the pressure connection (66).

12. Slave cylinder (50) according to any one of claims 7 to 11, **characterized in that** in the installed position of the slave cylinder (50) the opening (74) of the channel (72) at the pressure chamber side is disposed at the top adjacent to the inner circumferential surface (64) of the cylinder housing (52).

13. Slave cylinder (50) according to any one of the preceding claims, **characterized in that** the device (70) for reducing pressure pulses comprises a volume receiving means (78) mounted at the insert member (68) and elastically deformable under pressure.

14. Slave cylinder (50) according to at least claims 2 and 13, **characterized in that** the volume receiving means (78) is mounted at the inner circumference of the shroud section (156) of the insert member (68).

15. Slave cylinder (50) according to claim 14, **characterized in that** the volume receiving means (78) is a rubber-elastic spool-shaped element with a passage bore (188) and an annular recess (194) at the outer circumferential side, the recess together with the inner circumference of the shroud section (156) of the insert member (68) bounding an annular air chamber (196).

16. Slave cylinder (50) according to at least claims 7 and 13, **characterized in that** the volume receiving means (78) as seen from the pressure chamber (60) is hydraulically connected upstream of the channel (72) forming the additional conduit path.

17. Slave cylinder (50) according to at least claims 8 and 13, **characterized in that** the helix section (168) of the channel (72) coaxially surrounds the volume receiving means (78).

18. Slave cylinder (50) according to at least claims 2 and 8, **characterized in that** the insert member (68) comprises an inner insert (202) of substantially pot-shaped construction with an inner insert shroud section (204) and an inner insert base (206), wherein formed between the shroud section (156) of the insert member (68) and the inner insert shroud section (204) is a helically extending helix section prolongation (208) in fluid connection at one end thereof with the helix section (168) and at the other end thereof with an interior space (210) of the inner insert (202), which interior space in turn communicates with the pressure connection (66).

19. Slave cylinder (50) according to claim 18, **characterized in that** the helix section prolongation (208) is formed at the outer circumference of the inner insert shroud section (204) as a groove, which is radially outwardly covered by an inner circumferential surface (212) of the shroud section (156) of the insert member (68).

20. Slave cylinder (50) according to any one of the preceding claims, **characterized in that** a thermostatically operating bypass valve (216) providing a direct fluid connection between the pressure chamber (60) and the pressure connection (66) at low temperatures and interrupting this fluid connection at higher temperatures is provided in the insert member (68) in hydraulically parallel connection with respect to the device (70) for reducing pressure pulses.

21. Slave cylinder (50) according to at least claims 18 and 20, **characterized in that** the bypass valve (216) comprises a thermostatic element (218) received in the interior space (210) of the inner insert (202) between the base (158) of the insert member (68) and the inner insert base (206) and operatively connected with a plunger (220) which opens or closes an opening (222) in the inner insert base (206) in dependence on temperature in order to provide the direct fluid connection between the pressure chamber (60) and the pressure connection (66) at low temperatures and to interrupt this fluid connection at higher temperatures.

22. Slave cylinder (50) according to any one of the preceding claims, **characterized in that** the insert member (68) or the inner insert (202) has at the end thereof at the pressure chamber side a fastening section (174) which co-operates with an extension (176) of the piston (56) at the pressure chamber side such that the piston (56) prior to filling with pressure medium or first actuation of the slave cylinder (50) is fixed in a predetermined stroke position with respect to the cylinder housing (52) and is releasable relative to the cylinder housing (52) when filling with pressure medium or first actuation of the slave cylinder (50) takes place.

23. Slave cylinder (50) according to claim 22, **characterized in that** the fastening section (174) of the insert member (68) or the inner insert (202) comprises a hollow cylinder (178), which is axially aligned with respect to a center axis of the pressure chamber (60), with an annular bead (180) at the inner circumferential side, the central extension (176) at the piston (56) being provided at the outer circumferential side with an annular collar (182) which engages behind the annular bead (180) when the piston (56) is in the state of being fixed to the insert member (68) or inner insert (202).

24. Slave cylinder (50) according to any one of the preceding claims, **characterized in that** the insert member (68) is injection-molded from a plastics material.

## Revendications

1. Cylindre récepteur (50) pour un système hydraulique de transmission de force à oscillations amorties, notamment un actionnement hydraulique d'embrayage pour véhicules automobiles, comprenant un carter de cylindre (52), un piston (56) qui y est logé en coulissement longitudinal, et une chambre de pression (60) qui est délimitée par le carter de cylindre (52) et le piston (56), et qui peut être alimentée sélectivement avec un fluide de pression par l'intermédiaire d'un raccord de pression (66) prévu dans le carter de cylindre (52) en vue de faire coulisser le piston (56) dans le carter de cylindre (52), **caractérisé par** une pièce d'insert (68) mise en place dans la chambre de pression (60) et fixée dans le raccord de pression (66), et qui est dotée d'un dispositif (70) toujours ouvert pour le fluide de pression, pour assurer la réduction de pulsations de pression.

2. Cylindre récepteur (50) selon la revendication 1, **caractérisé en ce que** la pièce d'insert (68) est d'une configuration sensiblement en forme de coupelle et comporte un tronçon d'enveloppe périphérique (156) et un fond (158) auquel se raccorde un appendice de prolongement (160) sensiblement cylindrique creux, qui est emmanché dans le raccord de pression (66) du carter de cylindre (52).

3. Cylindre récepteur (50) selon la revendication 1 ou la revendication 2, **caractérisé en ce que** la pièce d'insert (68) est fixée axialement par complémentarité de formes dans le raccord de pression (66) du carter de cylindre (52).

4. Cylindre récepteur (50) selon la revendication 3, **caractérisé en ce que** la pièce d'insert (68) est fixée, au moyen d'une liaison par encliquetage, dans le raccord de pression (66) du carter de cylindre (52).

5. Cylindre récepteur (50) selon les revendications 2 à 4, **caractérisé en ce que** l'appendice de prolongement (160) de la pièce d'insert (68) est pourvu à la périphérie extérieure, en partant de son extrémité libre, d'un collet annulaire (162), et est fendu longitudinalement plusieurs fois pour former plusieurs bras élastiques (164), le collet annulaire (162) sur l'appendice de prolongement (160) venant, dans l'état monté de la pièce d'insert (68), s'engager derrière une surface frontale annulaire (128) dirigée à l'opposé de la chambre de pression (60) dans le raccord de pression (66) du carter de cylindre (52).

6. Cylindre récepteur (50) selon la revendication 5, **caractérisé en ce que** le carter de cylindre (52) comporte un corps de base (80) en matière plastique, qui est pourvu d'un alésage (98) dans lequel est inséré un fourreau de déplacement métallique (100) pour le piston (56), la surface frontale annulaire (128) derrière laquelle vient s'engager la pièce d'insert (68) dans le raccord de pression (66) du carter de cylindre (52), étant formée par une extrémité du fourreau de déplacement (100) du carter de cylindre (52).

7. Cylindre récepteur (50) selon l'une des revendications précédentes, **caractérisé en ce que** le dispositif (70) pour la réduction de pulsations de pression présente un parcours de conduite supplémentaire sous la forme d'un canal (72) avec une ouverture (74) côté chambre de pression et une ouverture (76) côté raccord de pression, le canal (72) présentant une longueur, qui est d'une valeur égale à un multiple de la distance directe entre les deux ouvertures (74, 76).

8. Cylindre récepteur (50) selon la revendication 7, **caractérisé en ce que** le canal (72) présente un tronçon en hélice (168) s'étendant à la manière d'un filetage de vis.

9. Cylindre récepteur (50) selon au moins les revendications 2 et 8, **caractérisé en ce que** le tronçon en hélice (168) du canal (72) est réalisé à la périphérie extérieure du tronçon d'enveloppe périphérique (156) de la pièce d'insert (68), sous forme de rainure qui est recouverte radialement vers l'extérieur, par une surface périphérique intérieure (64) du carter de cylindre (52).

10. Cylindre récepteur (50) selon la revendication 9, **caractérisé en ce que** le canal (72) présente un tronçon d'extrémité (172), qui est formé par l'appendice de prolongement (160) de la pièce d'insert (68), et est relié au tronçon en hélice (168) par un tronçon de liaison (170) du canal (172), qui s'étend dans le fond (158) de la pièce d'insert (68).

11. Cylindre récepteur (50) selon l'une des revendications 8 à 10, **caractérisé en ce que** le tronçon en hélice (168) du canal (72) présente une section transversale, qui est plus petite ou égale à la section transversale minimale du raccord de pression (66).

12. Cylindre récepteur (50) selon l'une des revendications 7 à 11, **caractérisé en ce que** l'ouverture (74) côté chambre de pression, du canal (72), se trouve, dans la position montée du cylindre récepteur (50), en haut à proximité de la surface périphérique intérieure (64) du carter de cylindre (52).

13. Cylindre récepteur (50) selon l'une des revendications précédentes, **caractérisé en ce que** le dispositif (70) pour la réduction de pulsations de pression comprend un absorbeur de volume (78) monté sur la pièce d'insert (68) et pouvant être déformé élastiquement sous l'effet de la pression.

14. Cylindre récepteur (50) selon au moins les revendications 2 et 13, **caractérisé en ce que** l'absorbeur de volume (78) est monté à la périphérie intérieure du tronçon d'enveloppe périphérique (156) de la pièce d'insert (68).

15. Cylindre récepteur (50) selon la revendication 14, **caractérisé en ce que** concernant l'absorbeur de volume (78), il s'agit d'un élément en forme de bobine, élastique à la manière du caoutchouc et comportant un alésage de passage (188) et un évidement annulaire (194) du côté de la périphérie extérieure, qui délimite, en commun avec la périphérie intérieure du tronçon d'enveloppe périphérique (156) de la pièce d'insert (68), une chambre à air (196) de forme annulaire.

16. Cylindre récepteur (50) selon au moins les revendications 7 et 13, **caractérisé en ce que** l'absorbeur de volume (78) est monté, vu à partir de la chambre de pression (60), hydrauliquement en amont du canal (72) formant le parcours de conduite supplémentaire.

17. Cylindre récepteur (50) selon au moins les revendications 8 et 13, **caractérisé en ce que** le tronçon en hélice (168) du canal (72) entoure coaxialement l'absorbeur de volume (78).

18. Cylindre récepteur (50) selon au moins les revendications 2 et 8, **caractérisé en ce que** la pièce d'insert (68) comprend un insert intérieur (202) sensiblement en forme de coupelle avec un tronçon d'enveloppe périphérique d'insert intérieur (204) et un fond d'insert intérieur (206), et **en ce qu'**entre le tronçon d'enveloppe périphérique (156) de la pièce d'insert (68) et le tronçon d'enveloppe périphérique d'insert intérieur (204), est formé un prolongement de tronçon en hélice (208) s'étendant à la manière d'un filetage de vis, et dont une extrémité est reliée sur le plan fluidique au tronçon en hélice (168), et l'autre extrémité à une chambre intérieure (210) de l'insert intérieur (202), qui pour sa part communique avec le raccord de pression (66).

19. Cylindre récepteur (50) selon la revendication 18, **caractérisé en ce que** le prolongement de tronçon en hélice (208) est réalisé à la périphérie extérieure du tronçon d'enveloppe périphérique d'insert intérieur (204) sous la forme d'une rainure qui est recouverte radialement vers l'extérieur, par une surface périphérique intérieure (212) du tronçon d'enveloppe périphérique (156) de la pièce d'insert (68).

20. Cylindre récepteur (50) selon l'une des revendications précédentes, **caractérisé en ce que** dans la pièce d'insert (68) est prévue une valve de dérivation (216) fonctionnant de manière thermostatique, montée hydrauliquement en parallèle par rapport au dispositif (70) pour la réduction de pulsations de pression, et qui, en cas de basses températures, assure une liaison fluidique directe entre la chambre de pression (60) et le raccord de pression (66), et interrompt cette liaison fluidique pour des températures plus élevées.

21. Cylindre récepteur (50) selon au moins les revendications 18 et 20, **caractérisé en ce que** la valve de dérivation (216) présente un élément thermostatique (218), qui est logé dans l'espace intérieur (210) de l'insert intérieur (202), entre le fond (158) de la pièce d'insert (68) et le fond d'insert intérieur (206), et qui est lié de manière active à un poussoir (220) ouvrant ou fermant une ouverture (222) dans le fond d'insert intérieur (206), en vue d'assurer, aux basses températures, la liaison fluidique directe entre la chambre de pression (60) et le raccord de pression (66), et respectivement interrompre cette liaison fluidique pour les températures plus élevées.

22. Cylindre récepteur (50) selon l'une des revendications précédentes, **caractérisé en ce que** la pièce d'insert (68), respectivement l'insert intérieur (202), présente à son extrémité côté chambre de pression, un tronçon de retenue (174), qui interagit avec un appendice de prolongement (176) du piston (56) de manière telle, que le piston (56), avant un remplissage de fluide de pression ou un premier actionnement du cylindre récepteur (50), soit fixé dans une position de déplacement prédéterminée par rapport au carter de cylindre (52), et puisse être libéré par rapport au carter de cylindre (52), avec le remplissage de fluide de pression ou respectivement le premier actionnement du cylindre récepteur (50).

23. Cylindre récepteur (50) selon la revendication 22, **caractérisé en ce que** le tronçon de retenue (174) de la pièce d'insert (68), respectivement de l'insert intérieur (202), présente un cylindre creux (178) avec un bourrelet annulaire (180) sur le côté de la périphérie intérieure, qui est aligné axialement par rapport à un axe central de la chambre de pression (60), tandis que l'appendice de prolongement centré (176) sur le piston (56) est pourvu d'un collet annulaire (182) sur sa périphérie extérieure, qui vient s'engager derrière le bourrelet annulaire (180) dans l'état dans lequel le piston (56) est fixé à l'a pièce d'insert (68) ou respectivement à l'insert intérieur (202).

24. Cylindre récepteur (50) selon l'une des revendications précédentes, **caractérisé en ce que** la pièce d'insert (68) est moulée par injection, en une matière plastique.
